(19) Europäisches Patentamt
European Patent Office
Office européen des brevets

(11) **EP 4 768 669 A1**

(12) **EUROPEAN PATENT APPLICATION**
published in accordance with Art. 153(4) EPC

(43) Date of publication:
01.07.2026 Bulletin 2026/27

(21) Application number: 24872560.8

(22) Date of filing: 27.09.2024

(51) International Patent Classification (IPC):
*E02F 9/20* (2006.01)  *E02F 3/43* (2006.01)
*F15B 11/02* (2006.01)  *F15B 11/16* (2006.01)
*F15B 11/042* (2006.01)  *F15B 11/044* (2006.01)

(52) Cooperative Patent Classification (CPC):
E02F 3/43; E02F 9/20; F15B 11/02; F15B 11/042;
F15B 11/044; F15B 11/16

(86) International application number:
PCT/JP2024/034798

(87) International publication number:
WO 2025/070779 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.09.2023 JP 2023170928

(71) Applicant: Hitachi Construction Machinery Co.,
Ltd.
Tokyo 110-0015 (JP)

(72) Inventors:
• KUMAGAI, Kento
Tsuchiura-shi, Ibaraki 3000013 (JP)

• KANEHAMA, Mitsuhiko
Tsuchiura-shi, Ibaraki 3000013 (JP)
• FUKUCHI, Ryohei
Tsuchiura-shi, Ibaraki 3000013 (JP)
• SUZUKI, Yusuke
Tsuchiura-shi, Ibaraki 3000013 (JP)
• AMANO, Hiroaki
Tsuchiura-shi, Ibaraki 3000013 (JP)
• SHIRATO, Shuu
Tsuchiura-shi, Ibaraki 3000013 (JP)
• IZAWA, Kei
Tsuchiura-shi, Ibaraki 3000013 (JP)

(74) Representative: Manitz Finsterwald
Patent- und Rechtsanwaltspartnerschaft mbB
Martin-Greif-Straße 1
80336 München (DE)

(54) **CONSTRUCTION MACHINE**

(57)    The construction machine includes a flow control valve as a hydraulic equipment that adjusts the flow rate supplied to the hydraulic cylinder for driving the work implement, and a controller that controls the hydraulic cylinder to meet the condition that the work tool does not move beyond the target surface. The controller calculates the target speed of the hydraulic cylinder such that the work tool meets the condition, based on the detection information of the detection device that detects the posture of the work implement and the information of the target surface. Then, if the target value of the hydraulic equipment corresponding to the calculated target speed is smaller than the lower limit value that can ensure the accuracy of flow rate control, the controller recalculates the target speed of the hydraulic cylinder such that the work tool meets the condition based on the limit speed of the hydraulic cylinder obtained from the lower limit value, and controls the hydraulic equipment by the target value corresponding to the recalculated target speed.

EP 4 768 669 A1

# [FIG. 7]

```
                    START

                      │
                      ▼                    S10
         NO    ┌──────────────────┐
      ◄────────┤ There is Input from│
               │ Operation Device ? │
               └──────────────────┘
                      │ YES
                      ▼
                                          S30
         ┌──────────────────────────────────┐
         │ Calculate Target Speed Va_t of Each Actuator │
         └──────────────────────────────────┘
                      │
                      ▼                    S40
         ┌──────────────────────────────────┐
         │ Calculate Target Flow Rate Qa_t of Each Actuator │
         │   from Target Speed Va_t of Each Actuator        │
         └──────────────────────────────────┘
```

Calculate Target Speed Va_t of Each Actuator — S30

Calculate Target Flow Rate Qa_t of Each Actuator from Target Speed Va_t of Each Actuator — S40

Calculate Pump Target Flow Rate Qp_t and Final Target Opening Af_Ft of Each Flow Control Valve — S50

Calculate Target Openings of Directional Control Valve and CB Cut Valve — S20

Calculate Final Target Flow Rate Qa_Ft of Actuator — S60

Calculate Limit Speed Va_lim of Actuator — S70

$Va\_t < Va\_lim$ ? — S80

YES → Recalculate Target Speed Va_t of Each Actuator Using Limit Speed Va_lim — S90

NO

Calculate Control Commands to Pump, Directional Control Valve, Flow Control Valve, and CB Cut Valve, and Output Control Command to Each Electromagnetic Proportional Reducing Valve — S100

END

## Description

Technical Field

The present invention relates to a construction machine, and more specifically, to a construction machine that controls a work implement driven by a hydraulic actuator to operate under predetermined conditions.

Background Art

A construction machine such as a hydraulic excavator includes a vehicle body with a swing body and a work implement attached to the swing body. Driven bodies such as the swing body and work implement are driven by hydraulic actuators such as hydraulic motors and hydraulic cylinders. The work implement is a multi-joint type device configured by rotatably connecting a plurality of link members, and is composed of, for example, a boom connected to the swing body to be rotatable in the vertical direction, an arm connected to the tip of the boom to be rotatable in the vertical direction, and a bucket connected to the tip of the arm to be rotatable in the vertical direction. The boom, arm, and bucket are each driven by a boom cylinder, arm cylinder, and bucket cylinder, respectively. It is not easy to excavate a predetermined area by operating a plurality of link members that configure the work implement through manual operation of the operation device, and the operator is required to have skilled operation techniques.

Therefore, as an example of a means to facilitate such work, the technology described in patent document 1 is known. The area limit excavation control device of the construction machine described in patent document 1 performs control to decelerate the movement of the front device (work implement) in the direction approaching the boundary of the setting area by correcting the operation signal of the control lever device related to the front device with the first signal correction means. When the front device approaches the boundary of the setting area, the movement in the direction of approaching the boundary is decelerated, making it possible to move the front device along the boundary of the setting area. As a result, the operator can perform accurate and stable work without being influenced by the proficiency of operation techniques.

However, the technology described in patent document 1 has the following issues. When performing semi-automatic control of the front device (work implement) according to the command of the control device that corrects the operation signal of the control lever device, it is important for the tip of the front device to move accurately along the target movement trace. To achieve this, it is necessary to match the flow rate of the pressure oil supplied to the hydraulic actuator driving the front device to the target flow rate. In the area limit excavation control device described in patent document 1, the opening amount of the flow control valve is adjusted by controlling the control pressure (pilot pressure) driving the flow control valve, thereby controlling the supply flow rate to the hydraulic actuator. However, even if the opening amount of the flow control valve can be accurately controlled, if the differential pressure before and after the flow control valve fluctuates due to load fluctuations of the front device (fluctuations in the load pressure of the hydraulic actuator), the flow rate of the pressure oil supplied to the hydraulic actuator via the flow control valve may fluctuate and become unstable.

As a means to solve such issues, for example, the technology described in patent document 2 has been proposed. In the hydrostatic drive system described in patent document 2, the flow rate of the pressure medium (pressure oil) supplied to the consumption machine (hydraulic actuator) is controlled by an adjustment valve (flow control valve) with a throttling effect. The opening amount of the adjustment valve is adjusted according to the pressure drop (differential pressure before and after) of the adjustment valve detected by the pressure sensor so that the volume flow rate requested by the setting device is supplied to the consumption machine. As a result, even if the load pressure of the consumption machine or the supply pressure of the hydraulic pump fluctuates, it is possible to accurately control the flow rate of the pressure medium supplied to the consumption machine without additional pressure compensators.

Prior Art Documents

Patent Documents

Patent document 1: WO 1995/030059
Patent document 2: JP 2014-98487A

Summary of the Invention

Problems to be Solved by the Invention

When executing control to limit the operation of the work implement (front device) to a predetermined area, as in the area limit excavation control device described in patent document 1 (hereinafter referred to as area limit control of the work implement), it is considered to apply the technology described in patent document 2, which adjusts the opening area of the flow control valve (adjustment valve) according to the differential pressure before and after it, to enhance the accuracy of flow control for the hydraulic actuator driving the work implement. When driving the hydraulic actuator at low speed during the area limit control of the work implement, there is a concern that the accuracy of flow control may decrease. If the accuracy of flow control for the hydraulic actuator decreases, it becomes difficult to accurately control the operation of the work implement. This is due to reasons such as the following.

When the throttle of a flow control valve controlling flow rate, like the adjustment valve described in patent document 2, is defined as a restriction orifice, the passing flow rate Q of the flow control valve is expressed by the following equation (1).

$$Q = A \times \sqrt{(2 \times \Delta P / \rho)} \times Cd \; : \; \text{Equation (1)}$$

Here, A is the opening area of the flow control valve, and $\Delta P$ is the differential pressure before and after the flow control valve. $\rho$ is the density of the hydraulic fluid, and Cd is the flow coefficient of the flow control valve.

In the technology described in patent document 2, the opening amount of the flow control valve is controlled by the control pressure (pilot pressure) generated by the pilot control valve corresponding to the control of the electronic control device. If there is an error in the control pressure generated by the pilot control valve relative to the target control pressure corresponding to the control of the electronic control device, a deviation occurs in the opening amount of the flow control valve. When driving the flow control valve under low flow conditions to drive the hydraulic actuator at low speed, as is clear from the above equation (1), it is necessary to control the opening area (A) of the flow control valve in a minute range. In this case, the impact of the error in the control pressure input to the flow control valve on the passing flow rate of the flow control valve becomes significant. Therefore, when driving the hydraulic actuator at low speed, there is a concern that the accuracy of flow rate control for the hydraulic actuator may decrease, making it difficult to accurately control the operation of the work implement.

The present invention has been made to solve the above problems, and its purpose is to provide a construction machine that can accurately control the operation of the work implement even when driving the hydraulic actuator at low speed during area limit control of the work implement.

Means for Solving the Problems

The present application includes a plurality of means for solving the above problems. An example of the construction machine of the present invention includes: a work implement including a work tool; at least one hydraulic actuator driving the work implement; a hydraulic equipment capable of adjusting a flow rate of pressure oil supplied to the hydraulic actuator; a controller configured to control the hydraulic actuator via the hydraulic equipment such that a condition is satisfied that the work tool does not move beyond the target surface set as a work target of the work tool; and a posture detection device detecting a posture of the work implement. The controller is configured to calculate a speed of the hydraulic actuator as a target speed such that the work tool meets the condition based on detection information of the posture detection device and setting information of the target surface, and calculate a target value of the hydraulic equipment corresponding to the calculated target speed of the hydraulic actuator. If the calculated target value of the hydraulic equipment is smaller than a lower limit value that can ensure the allowable accuracy of flow rate control by the hydraulic equipment, the controller is configured to calculate a speed of the hydraulic actuator obtained from the lower limit value as a limit speed of the hydraulic actuator, recalculate a target speed of the hydraulic actuator based on the calculated limit speed of the hydraulic actuator such that the work tool meets the condition, and control the hydraulic equipment by a target value of the hydraulic equipment corresponding to the recalculated target speed of the hydraulic actuator as a control target.

Advantages of the Invention

According to an example of the present invention, if the target value for controlling the hydraulic equipment adjusting the supply flow rate to the hydraulic actuator falls below the lower limit value that can ensure the accuracy of flow control, the target value of the hydraulic equipment corresponding to the recalculated target speed of the hydraulic actuator based on the calculated limit speed of the hydraulic actuator using the lower limit value is used as the control target. Therefore, even when operating the work implement by low-speed driving of the hydraulic actuator in area limit control of the work implement, it is possible to prevent a decrease in the accuracy of flow rate control for the hydraulic actuator and accurately control the operation of the work implement. Other problems, configurations, and effects will be clarified by the description of the embodiments below.

Brief Description of the Drawings

[FIG. 1] FIG. 1 is a side view showing a hydraulic excavator as an example of a construction machine according to the first embodiment of the present invention.
[FIG. 2] FIG. 2 is a hydraulic circuit diagram showing the main configuration (main circuit) of the hydraulic system included in the construction machine according to the first embodiment shown in FIG. 1.
[FIG. 3] FIG. 3 is a hydraulic circuit diagram showing the pilot circuit of the hydraulic system included in the construction machine according to the first embodiment shown in FIG. 1.
[FIG. 4] FIG. 4 is a block diagram showing the hardware and functional configuration of the controller in the construction machine according to the first embodiment.
[FIG. 5] FIG. 5 is a diagram showing the factors of accuracy degradation in flow control in the flow control valve, which is a component of the hydraulic system of the construction machine according to the first embodiment shown in FIG. 2.
[FIG. 6] FIG. 6 is a block diagram showing the subdivided processing functions of the flow control valve target opening calculation section in the controller of the construction machine according to the first embodiment shown in FIG. 4.
[FIG. 7] FIG. 7 is a flowchart showing an example of the control procedure by the controller of the construction machine according to the first embodiment shown in FIG. 4.
[FIG. 8] FIG. 8 is an explanatory diagram showing the operation and effects of the construction machine according to the first embodiment.
[FIG. 9] FIG. 9 is a block diagram showing the hardware and functional configuration of the controller in the construction machine according to the second embodiment of the present invention.
[FIG. 10] FIG. 10 is a diagram showing the factors of accuracy degradation in flow control in the hydraulic pump, which is a component of the hydraulic system of the construction machine according to the second embodiment.
[FIG. 11] FIG. 11 is a block diagram showing the subdivided processing functions of the pump target flow rate calculation section in the controller of the construction machine according to the second embodiment shown in FIG. 9.
[FIG. 12] FIG. 12 is a flowchart showing an example of the control procedure by the controller of the construction machine according to the second embodiment shown in FIG. 9.

Modes for Carrying the Invention

Below, embodiments of the construction machine of the present invention will be described with reference to the drawings. In this embodiment, a hydraulic excavator is given as an example of construction machines. It should be noted that the directions of front, back, left, and right mentioned in this specification refer to the directions as seen from the operator on board the construction machine.

[First Embodiment]

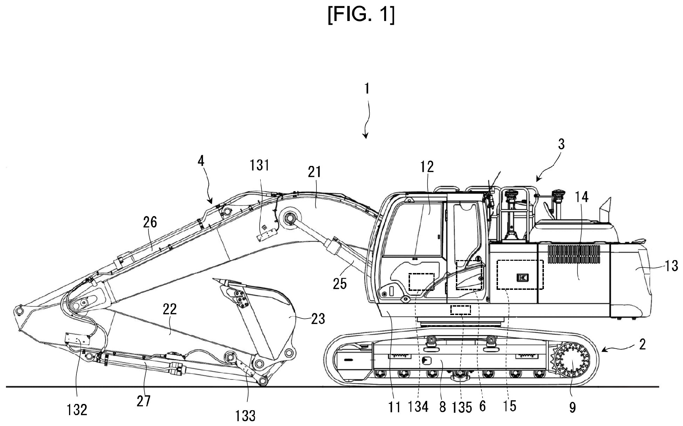

First, the configuration of the hydraulic excavator as a construction machine according to the first embodiment of the present invention will be described with reference to FIG. 1. FIG. 1 is a side view showing a hydraulic excavator as an example of the construction machine according to the first embodiment.

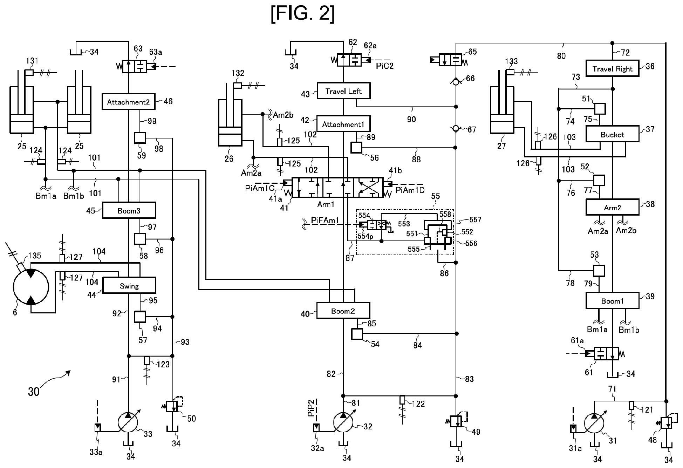

In FIG. 1, the hydraulic excavator 1 is roughly composed of a self-propelled travel body 2, a swing body 3 mounted on the travel body 2 in a rotatable manner, and a work implement 4 attached to the swing body 3 in a manner that allows vertical rotation. The travel body 2 and the swing body 3 constitute the body of the hydraulic excavator 1 as a construction machine. The swing body 3 is configured to rotate relative to the travel body 2 by a swing device that includes a swing motor 6 as a hydraulic actuator (see also FIG. 2 below).

The travel body 2 is equipped with crawler-type travel devices 8 (only one is shown) on the left and right. The left and right travel devices 8 are each driven by a travel motor 9 as a hydraulic actuator (only the left travel motor is shown).

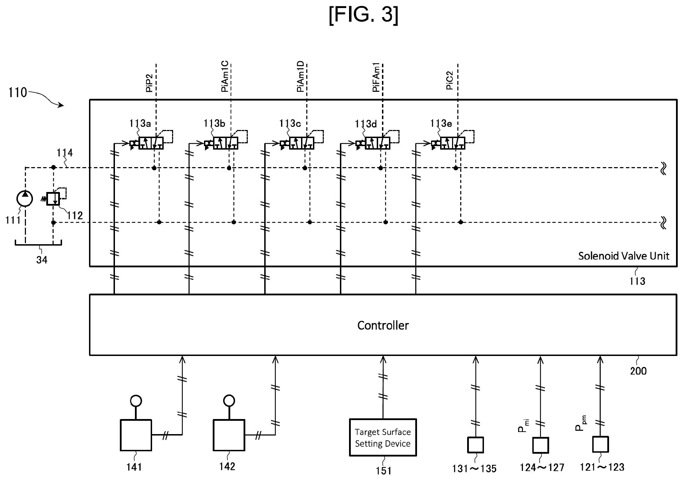

The swing body 3 is configured to include a swing frame 11 as a support structure rotatably mounted on the travel body 2, an operating room 12 installed on the left front side of the swing frame 11, a counterweight 13 installed at the rear end of the swing frame 11, and a machine room 14 installed between the operating room 12 and the counterweight 13. The operating room 12 is equipped with an operator's seat (not shown) where the operator sits, and operation devices 141, 142 (see FIG. 3 below) as described later. The counterweight 13 is for balancing the weight with the work implement 4. The machine room 14 houses various equipment such as a prime mover (not shown), hydraulic pumps 31, 32, 33 (see FIG. 2 below), a pilot pump 111 (see FIG. 3 below), and a control valve block 15 as an assembly of a plurality of directional control valves 36 to 46 and flow control valves 51 to 59 as described later.

The work implement 4 is a multi-joint type operation mechanism for performing excavation work and the like, and it is equipped with three link members, for example, a boom 21, an arm 22, and a bucket 23 as a work tool. The base end side of the boom 21 is rotatably attached to the front part of the swing body 3. The base end of the arm 22 is rotatably attached to the tip part of the boom 21. The base end of the bucket 23 is rotatably attached to the tip part of the arm 22. The boom 21, arm 22, and bucket 23 as driven bodies are each driven by a pair of boom cylinders 25, arm cylinders 26, and bucket cylinders 27 as hydraulic actuators (see also FIG. 2 below).

The work implement 4 is equipped with inertial measurement units (IMU) 131, 132, 133 as detection devices for detecting the posture and operation state of the boom 21, arm 22, and bucket 23. The IMUs 131, 132, 133 are installed on the link members connected to the boom 21, arm 22, and bucket 23, respectively. The swing body 3 is equipped with an inertial measurement unit (IMU) 134 for detecting the posture and operation state of the body including the swing body 3, and an inertial measurement unit (IMU) 135 for detecting the swing speed of the swing body 3. Each of the IMUs 131, 132, 133, 134, 135 outputs a detection signal corresponding to the detected values (information on posture and operation state) to the controller 200 described later (see FIG. 3 below). It is also possible to configure the detection device for detecting the posture and operation state of the work implement 4 with an inclination sensor, a rotation angle sensor, or a stroke sensor instead of the IMUs 131, 132, 133.

Next, the configuration of the hydraulic system included in the construction machine according to the first embodiment will be described with reference to FIGS. 2 and 3. FIG. 2 is a hydraulic circuit diagram showing the main configuration (main circuit) of the hydraulic system included in the construction machine according to the first embodiment shown in FIG. 1. FIG. 3 is a hydraulic circuit diagram showing the configuration of the pilot circuit of the hydraulic system included in the construction machine according to the first embodiment shown in FIG. 1.

In FIG. 2, the hydraulic excavator 1 is equipped with a hydraulic system 30 that drives the driven bodies of the travel body 2, swing body 3, and work implement 4 (see FIG. 1) by hydraulic pressure. The hydraulic system 30 includes three main pumps consisting of a first hydraulic pump 31, a second hydraulic pump 32, and a third hydraulic pump 33, as well as a hydraulic fluid tank 34 for storing hydraulic fluid.

The three main pumps 31, 32, 33 are driven by a prime mover not shown. The first hydraulic pump 31, second hydraulic pump 32, and third hydraulic pump 33 are, for example, variable displacement hydraulic pumps, each having a first regulator, second regulator, and third regulator for adjusting the tilt angle of a swash plate or bent axis. The first regulator includes a first command pressure port 31a into which command pressure is input from the pilot circuit 110 described later (see FIG. 3). The second regulator includes a second command pressure port 32a into which command pressure PiP2 is input from the pilot circuit 110. The third regulator includes a third command pressure port 33a into which command pressure is input from the pilot circuit 110.

The first discharge line 71 of the first hydraulic pump 31 is connected to the hydraulic fluid tank 34 via a first center bypass line 72 and is also connected to the hydraulic fluid tank 34 via a main relief valve 48 to protect the hydraulic circuit from excessive pressure increases. On the first center bypass line 72, in order from the upstream side, a right travel directional control valve 36, a bucket directional control valve 37, a second arm directional control valve 38, a first boom directional control valve 39, and a first center bypass cut valve 61 (hereinafter referred to as the first CB cut valve) are placed. The bucket directional control valve 37, second arm directional control valve 38, and first boom directional control valve 39 are connected in parallel to a first parallel line 73 branched from the portion of the first center bypass line 72 connecting the right travel directional control valve 36 and the bucket directional control valve 37, via first oil passages 74, 75, second oil passages 76, 77, and third oil passages 78, 79, respectively.

The right travel directional control valve 36 controls the flow of pressure oil supplied from the first hydraulic pump 31 to the right travel motor (not shown) of a pair of travel motors, and also controls the flow of pressure oil discharged from the right travel motor to the hydraulic fluid tank 34. The bucket directional control valve 37 controls the flow of pressure oil supplied from the first hydraulic pump 31 to the bucket cylinder 27, and also controls the flow of pressure oil discharged from the bucket cylinder 27 to the hydraulic fluid tank 34. The second arm directional control valve 38 controls the flow of pressure oil supplied from the first hydraulic pump 31 to the arm cylinder 26, and also controls the flow of pressure oil discharged from the arm cylinder 26 to the hydraulic fluid tank 34. The first boom directional control valve 39 controls the flow of pressure oil supplied from the first hydraulic pump 31 to the boom cylinder 25, and also controls the flow of pressure oil discharged from the boom cylinder 25 to the hydraulic fluid tank 34. Each of the directional control valves 36 to 39 has pilot ports (not shown) at both ends, into which command pressure (pilot secondary pressure) from the pilot circuit 110 described later is input. The first CB cut valve 61 controls the flow of pressure oil discharged from the first hydraulic pump 31 to the hydraulic fluid tank 34 via the first center bypass line 72. The first CB cut valve 61 has a pilot port 61a into which command pressure (pilot secondary pressure) from the pilot circuit 110 described later is input.

The second discharge line 81 of the second hydraulic pump 32 is connected to the hydraulic fluid tank 34 via the second center bypass line 82 and is also connected to the hydraulic fluid tank 34 via the main relief valve 49 to protect the hydraulic circuit from excessive pressure increase. On the second center bypass line 82, in order from the upstream side, the second boom directional control valve 40, the first arm directional control valve 41, the first attachment directional control valve 42, the left travel directional control valve 43, and the second center bypass cut valve 62 (hereinafter, the second CB cut valve) are placed. The second boom directional control valve 40, the first arm directional control valve 41, the first attachment directional control valve 42, and the left travel directional control valve 43 are connected in parallel to the second parallel line 83 connected to the second discharge line 81 via the first oil passages 84, 85, the second oil passages 86, 87, the third oil passages 88, 89, and the fourth oil passage 90, respectively.

The second boom directional control valve 40 controls the flow of pressure oil supplied from the second hydraulic pump 32 to the boom cylinder 25, and also controls the flow of pressure oil discharged from the boom cylinder 25 to the hydraulic fluid tank 34. The first arm directional control valve 41 controls the flow of pressure oil supplied from the second hydraulic pump 32 to the arm cylinder 26, and also controls the flow of pressure oil discharged from the arm cylinder 26 to the hydraulic fluid tank 34. The first attachment directional control valve 42 controls the flow of pressure oil supplied from the second hydraulic pump 32 to the first special hydraulic actuator (not shown) that drives the first special attachment (not shown), such as a breaker or grapple, which is mounted in place of or in addition to the bucket 23 (see FIG. 1), and also controls the flow of pressure oil discharged from the first special hydraulic actuator to the hydraulic fluid tank 34. The left travel directional control valve 43 controls the flow of pressure oil supplied from the second hydraulic pump 32 to the left travel motor 9 (see FIG. 1) of a pair of travel motors, and also controls the flow of pressure oil discharged from the left travel motor 9 to the hydraulic fluid tank 34. Each of the directional control valves 40 to 43 has pilot ports (only shown for the first arm directional control valve 41: 41a, 41b) at both ends, into which command pressure (pilot secondary pressure) from the pilot circuit 110 described later is input. The second CB cut valve 62 controls the flow of pressure oil discharged from the second hydraulic pump 32 to the hydraulic fluid tank 34 via the second center bypass line 82. The second CB cut valve 62 has a pilot port 62a into which command pressure PiC2 (pilot secondary pressure) from the pilot circuit 110 described later is input.

The fourth oil passage 90 is connected to the first discharge line 71 of the first hydraulic pump 31 via the connection line 80. On the connection line 80, a merging valve 65 and a check valve 66 are placed. The merging valve 65 controls the supply of pressure oil from the first hydraulic pump 31 to the fourth oil passage 90 from the connection line 80, and by merging it with the pressure oil from the second hydraulic pump 32, it is possible to supply the pressure oil from the first hydraulic pump 31 to the left travel motor 9. The check valve 66 allows the flow of pressure oil from the connection line 80 to the fourth oil passage 90, while preventing the flow of pressure oil from the second parallel line 83 and the fourth oil passage 90 to the connection line 80.

A check valve 67 is placed in the portion between the connection point with the third oil passage 88 and the connection point with the fourth oil passage 90 in the second parallel line 83. The check valve 67 allows the flow from the second parallel line 83 to the fourth oil passage 90, while preventing the flow from the connection line 80 to the directional control valves 40, 41, 42 other than the left travel directional control valve 43.

The third discharge line 91 of the third hydraulic pump 33 is connected to the hydraulic fluid tank 34 via the third center bypass line 92 and is also connected to the hydraulic fluid tank 34 via the main relief valve 50 to protect the hydraulic circuit from excessive pressure increase. On the third center bypass line 92, in order from the upstream side, the swing directional control valve 44, the third boom directional control valve 45, the second attachment directional control valve 46, and the third center bypass cut valve 63 (hereinafter, the third CB cut valve) are placed. The swing directional control valve 44, the third boom directional control valve 45, and the second attachment directional control valve 46 are connected in parallel to the third parallel line 93 connected to the third discharge line 91 via the first oil passages 94, 95, the second oil passages 96, 97, and the third oil passages 98, 99, respectively.

The swing directional control valve 44 controls the flow of pressure oil supplied from the third hydraulic pump 33 to the swing motor 6, and also controls the flow of pressure oil discharged from the swing motor 6 to the hydraulic fluid tank 34. The third boom directional control valve 45 controls the flow of pressure oil supplied from the third hydraulic pump 33 to the boom cylinder 25, and also controls the flow of pressure oil discharged from the boom cylinder 25 to the hydraulic fluid tank 34. In place of or in addition to bucket 23, if a second special attachment (not shown) equipped with a second special actuator (not shown) is mounted in addition to the first special attachment, or if a second special attachment equipped with both first and second special actuators is mounted in place of the first special actuator, the second attachment directional control valve 46 controls the flow of pressure oil supplied to the second special hydraulic actuator (not shown) that drives the second special attachment, and also controls the flow of pressure oil discharged from the second special hydraulic actuator to the hydraulic fluid tank 3. Each of the directional control valves 44 to 46 has pilot ports (not shown) at both ends, into which command pressure (pilot secondary pressure) from the pilot circuit 110 described later is input. The third CB cut valve 63 controls the flow of pressure oil discharged from the third hydraulic pump 33 to the hydraulic fluid tank 34 via the third center bypass line 92. The third CB cut valve 63 has a pilot port 63a into which command pressure (pilot secondary pressure) from the pilot circuit 110 described later is input.

Additionally, the first oil passages 74, 75, the second oil passages 76, 77, and the third oil passages 78, 79 which respectively connect the bucket directional control valve 37, the second arm directional control valve 38, and the first boom directional control valve 39 to the first parallel line 73, are each equipped with a bucket flow control valve 51, a second arm flow control valve 52, and a first boom flow control valve 53. The bucket flow control valve 51 controls the flow rate of pressure oil supplied from the first hydraulic pump 31 to the bucket cylinder 27 via the bucket directional control valve 37 (pump port). The second arm flow control valve 52 controls the flow rate of pressure oil supplied from the first hydraulic pump 31 to the arm cylinder 26 via the second arm directional control valve 38. The first boom flow control valve 53 controls the flow rate of pressure oil supplied from the first hydraulic pump 31 to the boom cylinder 25 via the first boom directional control valve 39.

The first oil passages 84, 85, second oil passages 86, 87, and third oil passages 88, 89, which respectively connect the second boom directional control valve 40, the first arm directional control valve 41, and the first attachment directional control valve 42 to the second parallel line 83, are each equipped with a second boom flow control valve 54, a first arm flow control valve 55, and a first attachment flow control valve 56. The second boom flow control valve 54 controls the flow rate of pressure oil supplied from the second hydraulic pump 32 to the boom cylinder 25 via the second boom directional control valve 40 (pump port). The first arm flow control valve 55 controls the flow rate of pressure oil supplied from the second hydraulic pump 32 to the arm cylinder 26 via the first arm directional control valve 41. The first attachment flow control valve 56 controls the flow rate of pressure oil supplied from the second hydraulic pump 32 to the first special actuator (not shown) via the first attachment directional control valve 42.

The first oil passages 94, 95, second oil passages 96, 97, and third oil passages 98, 99, which respectively connect the swing directional control valve 44, the third boom directional control valve 45, and the second attachment directional control valve 46 to the third parallel line 93, are each equipped with a swing flow control valve 57, a third boom flow control valve 58, and a second attachment flow control valve 59. The swing flow control valve 57 controls the flow rate of pressure oil supplied from the third hydraulic pump 33 to the swing motor 6 via the swing directional control valve 44 (pump port). The third boom flow control valve 58 controls the flow rate of pressure oil supplied from the third hydraulic pump 33 to the boom cylinder 25 via the third boom directional control valve 45. The second attachment flow control valve 59 controls the flow rate of pressure oil supplied from the third hydraulic pump 33 to the second special actuator (not shown) via the second attachment directional control valve 46.

All the flow control valves 51 to 59 have the same configuration. In FIG. 2, only the configuration of the first arm flow control valve 55 is illustrated, and the configurations of the other flow control valves 51 to 54, 56 to 59 are omitted. Here, only the configuration of the first arm flow control valve 55 will be explained.

The first arm flow control valve 55 is, for example, a seat-type flow control valve, which has superior responsiveness compared to spool-type flow control valves. The flow control valve 55 includes a seat-shaped valve body 551 that forms a variable throttle between the primary side second oil passage 86 and the secondary side second oil passage 87, a control variable throttle 552 installed in the valve body 551 to communicate with the primary side (second oil passage 86) of the valve body 551, a pilot line 553 that communicates the downstream side of the control variable throttle 552 with the secondary side (second oil passage 87) of the valve body 551, and a pilot variable throttle 554 placed on the pilot line 553. The housing incorporating the valve body 551 includes a first pressure chamber 555 formed at the connection with the primary side second oil passage 86 of the valve body 551 (variable throttle), a second pressure chamber 556 formed at the connection with the secondary side second oil passage 87 of the valve body 551 (variable throttle), and a third pressure chamber 557 formed to communicate with the first pressure chamber 555 via the control variable throttle 552. The control variable throttle 552 is connected to the first pressure chamber 555 via an oil passage 558 formed inside the valve body 551, and is configured such that the opening area to the third pressure chamber 557 changes according to the movement amount of the valve body 551. The pilot variable throttle 554 has a pilot port 554p into which the command pressure PiFAm1 (pilot secondary pressure) generated according to the command of the controller 200 described later is input, and the opening amount is adjusted according to the pilot pressure input to the pilot port 554p.

In the flow control valve 55, the movement amount of the valve body 551 is determined according to the pilot flow rate passing through the pilot line 553 due to the action of the control variable throttle 552. The pilot flow rate of the pilot line 553 is controlled by the opening amount of the pilot variable throttle 554. Therefore, the movement amount of the valve body 551 can be controlled via the opening amount of the pilot variable throttle 554, which can control the pilot flow rate of the pilot line 553. That is, the flow control valve 55 is configured to control the flow rate of pressure oil supplied to the first arm directional control valve 41 via the second oil passages 86, 87 according to the opening amount of the pilot variable throttle 554.

In FIG. 3, the hydraulic system 30 includes a pilot circuit 110 for controlling the drive of each hydraulic pilot-type directional control valve 36 to 46 and each flow control valve 51 to 59 (see FIG. 2), as well as for controlling the pump capacity of each hydraulic pump 31 to 33 (see FIG. 2). The pilot circuit 110 includes a pilot pump 111, which is a pilot hydraulic source. The pilot pump 111 is connected to the hydraulic fluid tank 34 via a pilot relief valve 112 for generating pilot primary pressure, and is also connected to the electromagnetic proportional reducing valves 113a, 113b, 113c, 113d, 113e, which constitute the solenoid valve unit 113, via the pilot line 114.

The electromagnetic proportional reducing valve 113a is connected to the second command pressure port 32a of the second regulator of the second hydraulic pump 32, and reduces the discharge pressure (pilot primary pressure) of the pilot pump 111 according to the command from the controller 200 described later to generate the pilot secondary pressure PiP2 as the command pressure. The electromagnetic proportional reducing valves 113b, 113c are connected to the pilot ports 41a, 41b of the first arm directional control valve 41, and reduce the discharge pressure of the pilot pump 111 according to the command from the controller 200 to generate the pilot secondary pressures PiAm1C, PiAm1D as the command pressures. The electromagnetic proportional reducing valve 113d is connected to the pilot port 554p of the pilot variable throttle 554 of the first arm flow control valve 55, and reduces the discharge pressure of the pilot pump 111 according to the command from the controller 200 to generate the pilot secondary pressure PiFAm1 as the command pressure. The electromagnetic proportional reducing valve 113e is connected to the pilot port 62a of the second CB cut valve 62, and reduces the discharge pressure of the pilot pump 111 according to the command from the controller 200 to generate the pilot secondary pressure PiC2 as the command pressure.

Note that, for simplicity, the electromagnetic proportional reducing valves for the command pressure ports 31a, 33a of the regulators of the first hydraulic pump 31 and the third hydraulic pump 33 are not shown. The electromagnetic proportional reducing valves for the directional control valves 36 to 40, 42 to 46, other than the first arm directional control valve 41, are also not shown. The electromagnetic proportional reducing valves for the flow control valves 51 to 54, 56 to 59, other than the first arm flow control valve 55, are also not shown. The electromagnetic proportional reducing valves for the CB cut valves 61, 63, other than the second CB cut valve 62, are also not shown.

In FIGS. 2 and 3, a first pressure sensor 121, a second pressure sensor 122, and a third pressure sensor 123 are installed in the first discharge line 71 of the first hydraulic pump 31, the second discharge line 81 of the second hydraulic pump 32, and the third discharge line 91 of the third hydraulic pump 33, respectively. The first pressure sensor 121, the second pressure sensor 122, and the third pressure sensor 123 detect the discharge pressure of the first hydraulic pump 31 (upstream pressure of flow control valves 51-53), the discharge pressure of the second hydraulic pump 32 (upstream pressure of flow control valves 54-56), and the discharge pressure of the third hydraulic pump 33 (upstream pressure of flow control valves 57-59), respectively. The first pressure sensor 121, the second pressure sensor 122, and the third pressure sensor 123 each output a detection signal corresponding to the detected pressure value to the controller 200 described later.

A pair of actuator lines 101, 101 connecting the first boom directional control valve 39, the second boom directional control valve 40, the third boom directional control valve 45, and the boom cylinder 25 are each equipped with a pressure sensor 124 that detects the pressure (meter-in pressure and meter-out pressure) of the pressure oil supplied to and discharged from the boom cylinder 25. Each pressure sensor 124 also functions as a pressure sensor that detects the pressure downstream of the boom flow control valves 53, 54, and 58. Each pressure sensor 124 outputs a detection signal corresponding to the detected pressure value to the controller 200 described later.

A pair of actuator lines 102, 102 connecting the second arm directional control valve 38, the first arm directional control valve 41, and the arm cylinder 26 are each equipped with a pressure sensor 125 that detects the pressure (meter-in pressure and meter-out pressure) of the pressure oil supplied to and discharged from the arm cylinder 26. Each pressure sensor 125 also functions as a pressure sensor that detects the downstream pressure of the arm flow control valves 52 and 55. Each pressure sensor 125 outputs a detection signal corresponding to the detected pressure value to the controller 200 described later.

A pair of actuator lines 103, 103 connecting the bucket directional control valve 37 and the bucket cylinder 27 are each equipped with a pressure sensor 126 that detects the pressure (meter-in pressure and meter-out pressure) of the pressure oil supplied to and discharged from the bucket cylinder 27. Each pressure sensor 126 also functions as a sensor that detects the downstream pressure of the bucket flow control valve 51. Each pressure sensor 126 outputs a detection signal corresponding to the detected pressure value to the controller 200 described later.

A pair of actuator lines 104, 104 connecting the swing directional control valve 44 and the swing motor 6 are each equipped with a pressure sensor 127 that detects the pressure (meter-in pressure and meter-out pressure) of the pressure oil supplied to and discharged from the swing motor 6. Each pressure sensor 127 also functions as a sensor that detects the downstream pressure of the swing flow control valve 57. Each pressure sensor 127 outputs a detection signal corresponding to the detected pressure value to the controller 200 described later.

Pressure sensor 121 and pressure sensor 124 constitute a pressure sensor that detects the differential pressure before and after the first boom flow control valve 53. Pressure sensor 121 and pressure sensor 125 constitute a pressure sensor that detects the differential pressure before and after the second arm flow control valve 52. Pressure sensor 121 and pressure sensor 126 constitute a pressure sensor that detects the differential pressure before and after the bucket flow control valve 51. Pressure sensor 122 and pressure sensor 124 constitute a pressure sensor that detects the differential pressure across the second boom flow control valve 54. Pressure sensor 122 and pressure sensor 125 constitute a pressure sensor that detects the differential pressure before and after the first arm flow control valve 55. Pressure sensor 123 and pressure sensor 124 constitute a pressure sensor that detects the differential pressure before and after the third boom flow control valve 58. Pressure sensor 123 and pressure sensor 127 constitute a pressure sensor that detects the differential pressure before and after the swing flow control valve 57.

The hydraulic system 30 includes an operation device comprising a boom control lever 141 and an arm control lever 142, which respectively instruct the operation of the boom 21 and the arm 22 as driven bodies. The boom control lever 141 can switch the first boom directional control valve 39, the second boom directional control valve 40, and the third boom directional control valve 45, and outputs an operation signal (electrical signal) as instruction information for instructing the operation of the boom 21 to the controller 200 described later. The arm control lever 142 can switch the first arm directional control valve 41 and the second arm directional control valve 38, and outputs an operation signal (electrical signal) as instruction information for instructing the operation of the arm 22 to the controller 200 described later.

Note that, to avoid complexity in the description of the operation device, the right travel control lever for switching the right travel directional control valve 36, the bucket control lever for switching the bucket directional control valve 37, the first attachment control lever for switching the first attachment directional control valve 42, the left travel control lever for switching the left travel directional control valve 43, the swing control lever for switching the swing directional control valve 44, and the second attachment control lever for switching the second attachment directional control valve 46 are not illustrated.

The controller 200 controls the hydraulic system 30. The controller 200 is electrically connected to the operation device, including the boom control lever 141 and the arm control lever 142, and receives the operation signals from each control lever 141, 142 of the operation device. The controller 200 is electrically connected to each pressure sensor 121-127, and receives the detection signals from each pressure sensor 121-123, 124-127. The controller 200 is electrically connected to each IMU 131-135, and receives the detection signals from each IMU 131-135.

The controller 200 is electrically connected to a target surface setting device 151. The target surface setting device 151 sets the target surface as the work target, such as the excavation work of the work implement 4. The target surface setting device 151 is, for example, a display device with a touch panel functioning as an input device, and outputs the setting information of the set target surface to the controller 200.

The controller 200 controls the electromagnetic proportional reducing valve 113a of the pilot circuit 110 according to the operation amount (instruction information) of the operation devices 141, 142, thereby controlling the pump volume of the second hydraulic pump 32 via the second regulator of the second hydraulic pump 32. Similarly, it also controls the pump volume of the first hydraulic pump 31 and the third hydraulic pump 33.

Additionally, the controller 200 controls the hydraulic pilot-operated directional control valve 41 for the first arm and the flow control valve 55 by controlling the electromagnetic proportional reducing valves 113b, 113c, and 113d of the pilot circuit 110. It similarly controls the other directional control valves 37-40, 42, 44-46 and the corresponding flow control valves 51-54, 56-59.

Furthermore, the controller 200 controls the hydraulic pilot-operated second CB cut valve 62 by controlling the electromagnetic proportional reducing valve 113e of the pilot circuit 110. It similarly controls the other CB cut valves 61, 63.

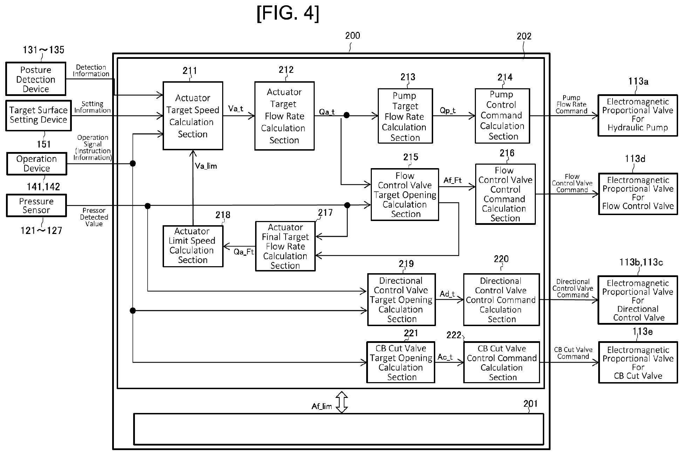

Next, the hardware and functional configuration of the controller in the construction machine according to the first embodiment will be described with reference to FIGS. 4 to 6. FIG. 4 is a block diagram showing the hardware and functional configuration of the controller in the construction machine according to the first embodiment.

In FIG. 4, the controller 200 is configured to execute area limit control (control that limits the operation of the work implement 4 within a limit area) to ensure that the bucket 23 does not move beyond the target surface set as the work target for the bucket 23, by controlling the hydraulic actuators 6, 25-27. In this area limit control, the flow direction of the pressure oil supplied to each hydraulic actuator 6, 25-27 and the flow direction of the hydraulic fluid discharged from each hydraulic actuator 6, 25-27 are controlled by each directional control valve 36-46. Additionally, in this area limit control, the flow rate (meter-in flow rate) of the pressure oil supplied to each hydraulic actuator 6, 25-27 is controlled by each flow control valve 51-59.

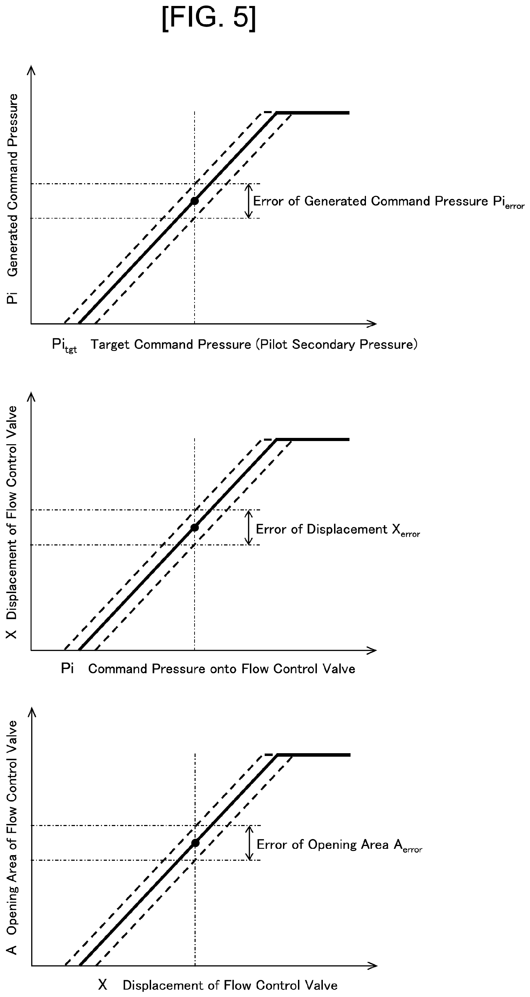

However, in the area limit control of the work implement 4 by the controller 200, when it is necessary to drive any of the hydraulic actuators 6, 25-27 at a low speed, there is a risk that the accuracy of the flow control by the flow control valves 51-59 may decrease. For example, when performing excavation work through the combined operation of the boom 21 and the arm 22, as the arm 22 approaches a vertical posture, there are times when the lifting amount of the boom 21 becomes minimal. At this time, since the meter-in flow rate of the boom cylinder 25 becomes a small flow rate, it is necessary to control the opening amount of the flow control valve in a minute range. However, the control of the opening amount of the flow control valve is subject to error factors as shown in FIG. 5, and these error factors can decrease the accuracy of the flow control. When the accuracy of flow control by the flow control valve decreases, the boom 21 may move up and down, making it difficult to maintain the precise operation of the work implement 4, and there is a concern that the work implement 4 may move outside the limit area.

FIG. 5 is a diagram showing the factors of accuracy decrease in flow control in the flow control valve, which is a component of the hydraulic system of the construction machine according to the first embodiment shown in FIG. 2. Flow control by the flow control valve 55 (as an example) is performed as follows. First, the electromagnetic proportional reducing valve 113d (see FIG. 3) generates a command pressure based on the control command from the controller 200. Second, the valve body of the flow control valve 55 is displaced according to the command pressure generated by the electromagnetic proportional reducing valve 113d. Finally, the passing flow rate is controlled according to the opening amount of the displacement in the opening shape formed by the valve body. The upper diagram in FIG. 5 shows an error range of the generated command pressure relative to the target command pressure (control command from the controller 200) of the electromagnetic proportional reducing valve. The middle diagram in FIG. 5 shows the error range of the displacement of the flow control valve relative to the generated command pressure of the electromagnetic proportional reducing valve. The lower diagram in FIG. 5 shows the error range of the opening area of the flow control valve relative to its displacement (due to machining errors of the opening shape, etc.). Due to such error factors, when controlling the opening amount of the flow control valve in a minute range, the accuracy of the flow control may decrease.

Therefore, in the controller 200 according to this embodiment, when performing operations that include hydraulic actuators that need to be driven at low speeds, such as excavation work through the combined operation of the boom 21 and the arm 22 mentioned above, both the boom cylinder 25 and the arm cylinder 26 are set to target speeds that are above the limit speed in the operations back and forth the arm 22 reaches a vertical posture, and they are operated at the respective set target speeds. This makes it possible to avoid instability in the operation of the work implement 4 due to the meter-in flow rate of the boom cylinder 25 becoming a small flow rate. In this embodiment, when the operation of the swing motor 6 or the bucket cylinder 27 is also the target of operation, it is characterized by setting a target speed that is above the limit speed of the hydraulic actuators 6, 25-27, which can maintain the accuracy of flow control, for the precise control of the meter-in flow rate of the hydraulic actuators 6, 25-27 that are the target of operation. In this embodiment, by controlling the meter-in flow rate of the hydraulic actuators 6, 25-27 that are the target of operation through the flow control of the flow control valves 51-59, it becomes possible to maintain stable operation of the work implement 4 even under conditions where the meter-in flow rate becomes a small flow rate.

The controller 200 is composed of a microcomputer that includes, for example, a storage device 201 made of RAM, ROM, etc., and a processing device 202 made of a CPU, MPU, etc. The storage device 201 stores in advance the programs and various information necessary to control a plurality of directional control valves 36-46 and a plurality of flow control valves 51-59, as well as a plurality of hydraulic pumps 31-33, for controlling the drive of a plurality of hydraulic actuators 6, 25-27. The processing device 202 reads programs and various information from the storage device 201 as needed and executes processing according to the program to realize various functions. The controller 200 may be composed of a single computer or a plurality of computers.

The controller 200 includes functional sections that can prevent the decrease in control accuracy of the meter-in flow rate during low-speed driving of the hydraulic actuators 6, 25-27, such as the actuator target speed calculation section 211, actuator target flow rate calculation section 212, pump target flow rate calculation section 213, pump control command calculation section 214, flow control valve target opening calculation section 215, flow control valve control command calculation section 216, actuator final target flow rate calculation section 217, actuator limit speed calculation section 218, directional control valve target opening calculation section 219, directional control valve control command calculation section 220, CB cut valve target opening calculation section 221, and CB cut valve control command calculation section 222.

The actuator target speed calculation section 211 calculates the provisional target speed of each hydraulic actuator 6, 25-27, such that the swing body 3 (machine body) and the work implement 4 perform operations corresponding to the operation of the operation devices 141, 142 under predetermined conditions, based on the detection information from the posture detection devices 131-135, the target surface setting information from the target surface setting device 151, and the operation signals (instruction information) from each control lever 141, 142 of the operation device. For example, it calculates the target speed of the tip of the bucket 23 so that the tip does not deviate from the target surface, and calculates the target speed of each hydraulic actuator necessary to achieve the calculated tip target speed. It also determines whether the provisional target speed of each hydraulic actuator 6, 25-27 from the calculation result is smaller than the limit speed $Va\_lim$ of the hydraulic actuators 6, 25-27, which is the calculation result of the actuator limit speed calculation section 218 described later. If the provisional target speed is equal to or greater than the limit speed, the provisional target speed is set as the target speed of each hydraulic actuator 6, 25-27. On the other hand, if the provisional target speed is smaller than the limit speed, the target speed of each hydraulic actuator 6, 25-27 is recalculated using the limit speed of the hydraulic actuators 6, 25-27. The target speed $Va\_t$ of each hydraulic actuator 6, 25-27 from the calculation result is output to the actuator target flow rate calculation section 212.

The actuator target flow rate calculation section 212 calculates the target flow rate $Qa\_t$ to be supplied to each hydraulic actuator 6, 25-27 based on the target speed $Va\_t$ of each hydraulic actuator 6, 25-27 from the calculation result of the actuator target speed calculation section 211 and the design specifications of each hydraulic actuator 6, 25-27 stored in advance in the storage device 201. The target flow rate $Qa\_t$ of each hydraulic actuator 6, 25-27 from the calculation result is output to the pump target flow rate calculation section 213 and the flow control valve target opening calculation section 215.

The pump target flow rate calculation section 213 calculates the pump target flow rate $Qp\_t$ of the pressure oil that the hydraulic pumps 31 to 33 should discharge, using the target flow rate $Qa\_t$ of each hydraulic actuator 6, 25 to 27, which is the calculation result of the actuator target flow rate calculation section 212. The pump target flow rate $Qp\_t$ from the calculation result is output to the pump control command calculation section 214.

The pump control command calculation section 214 calculates the pump flow rate command using the pump target flow rate $Qp\_t$ from the calculation result of the pump target flow rate calculation section 213, generates an electrical signal corresponding to the pump flow rate command, and outputs it to the electromagnetic proportional reducing valve 113a for the pump.

The flow control valve target opening calculation section 215 calculates the final target opening Af_Ft of each flow control valve 51-59, which can ensure the accuracy of flow control, based on the target flow rate Qa_t of each hydraulic actuator 6, 25-27, which is the calculation result of the actuator target flow rate calculation section 212, the detected values of pressure sensors 121-127 that can detect the differential pressure before and after the corresponding flow control valves 51-59, and the set value of the limit opening area Af_lim. The final target opening Af_Ft of each flow control valve 51-59 from the calculation result is output to the actuator final target flow rate calculation section 217. Additionally, the final target opening Af_Ft is output to the flow control valve control command calculation section 216 when the provisional target speed or recalculated target speed of each hydraulic actuator 6, 25-27 in the actuator target speed calculation section 211 is equal to or greater than the limit speed Va_lim of the hydraulic actuators 6, 25-27 described later.

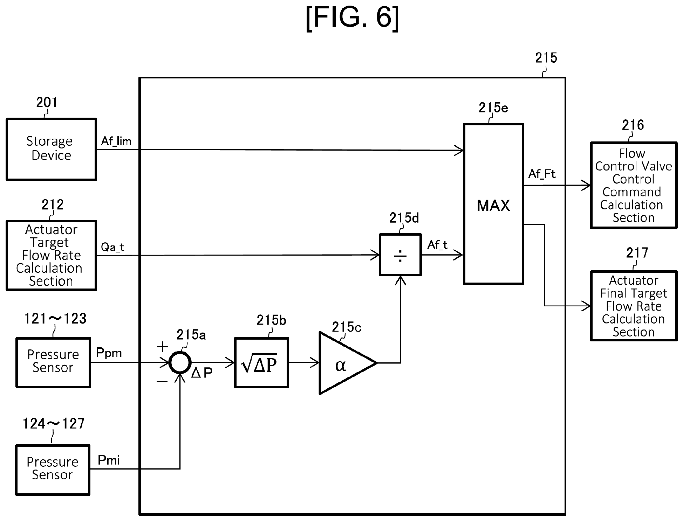

The calculation of the flow control valve target opening calculation section 215 is specifically performed by the process shown in FIG. 6. FIG. 6 is a block diagram illustrating the subdivided processing functions of the flow control valve target opening calculation section in the controller of the construction machine according to the first embodiment shown in FIG. 4.

The flow control valve target opening calculation section 215 calculates the target opening area of each flow control valve 51-59 through the processing of the differential processing section 215a based on the restriction orifice flow calculation equation, the square root processing section 215b, the coefficient processing section 215c, and the division processing section 215d. The differential processing section 215a performs differential processing by subtracting the meter-in pressure of each hydraulic actuator 6, 25-27, which is the detected value Pmi of each pressure sensor 124, 125, 126, 127, from the discharge pressure of each hydraulic pump 31-33, which is the detected value Ppm of each pressure sensor 121, 122, 123. That is, the differential processing section 215a corresponds to the processing of calculating the pressure difference ΔP (differential pressure before and after) between the upstream pressure and the downstream pressure of each flow control valve 51-59. The square root processing section 215b performs the processing of taking the square root of the differential pressure ΔP of each flow control valve 51-59, which is the processing result of the differential processing section 215a. The coefficient processing section 215c performs the processing of multiplying the processing result √ΔP of the square root processing section 215b by the coefficient α. The coefficient α is a value that includes all constants such as the flow coefficient and the density of the working fluid in the restriction orifice flow calculation equation. The division processing section 215d performs the processing of dividing the target flow rate Qa_t of each hydraulic actuator 6, 25-27, which is the calculation result of the actuator target flow rate calculation section 212, by the processing result of the coefficient processing section 215c. Through the processing of this series of differential processing section 215a, square root processing section 215b, coefficient processing section 215c, and division processing section 215d, the target opening area Af_t of each flow control valve 51-59 using the restriction orifice flow calculation equation is calculated.

The flow control valve target opening calculation section 215 further includes a maximum value selection processing section 215e that selects the maximum value between the target opening area Af_t of each flow control valve 51-59 calculated by the series of processing sections 215a, 215b, 215c, 215d, and the limit opening area Af_lim stored in advance in the storage device 201. The maximum value selection processing section 215e outputs the maximum value between the target opening area Af_t of each flow control valve 51-59 from the calculation result and the setting value of the limit opening area Af_lim as the final target opening area Af_Ft of each flow control valve 51-59 to the actuator final target flow rate calculation section 217.

The limit opening area Af_lim corresponds to the minimum opening area where the accuracy of flow control by each flow control valve 51-59 can maintain the allowable accuracy. The limit opening area Af_lim is determined, for example, as follows. In the area limit control of the work implement 4, the allowable error for controlling the tip position of the bucket 23 is set in advance. Corresponding to the allowable error of the position of the bucket 23, the allowable error of the driving speed of each hydraulic actuator 6, 25-27 can be specified. Corresponding to the allowable error of the driving speed of each hydraulic actuator 6, 25-27, the allowable error of the meter-in flow rate of each hydraulic actuator 6, 25-27 can be specified. Based on the errors shown in FIG. 5, the minimum opening area of each flow control valve 51-59 that can achieve the allowable error of the meter-in flow rate of each hydraulic actuator 6, 25-27 is set as the limit opening area.

The flow control valve control command calculation section 216 calculates the flow control valve command corresponding to the final target opening amount Af_Ft of each flow control valve 51-59, which is the calculation result of the flow control valve target opening calculation section 215, and generates an electrical signal corresponding to the flow control valve command to output to each electromagnetic proportional reducing valve 113d for the flow control valve.

The actuator final target flow rate calculation section 217 calculates the final target flow rate Qa_Ft of each hydraulic actuator 6, 25-27 based on the final target opening amount Af_Ft of each flow control valve 51-59, which is the calculation result of the flow control valve target opening calculation section 215, and the detected values of pressure sensors 121-127 that can detect the differential pressure before and after each flow control valve 51-59. This calculation uses, for example, the restriction orifice flow calculation equation or a preset map. The final target flow rate Qa_Ft of each hydraulic actuator 6, 25-27 from the calculation result is output to the actuator limit speed calculation section 218.

The actuator limit speed calculation section 218 calculates the speed of each hydraulic actuator 6, 25-27 corresponding to the final target flow rate $Qa\_Ft$ of the hydraulic actuators 6, 25-27, which is the calculation result of the actuator final target flow rate calculation section 217, as the limit speed $Va\_lim$. The limit speed $Va\_lim$ of the hydraulic actuators 6, 25-27 from the calculation result is output to the actuator target speed calculation section 211.

The directional control valve target opening calculation section 219 calculates the target opening amount $Ad\_t$ of each directional control valve 36-46 based on the thrust information or pressure information of each hydraulic actuator 6, 25-27 obtained from the detected values of pressure sensors 124-127 that can detect the meter-in pressure and meter-out pressure of each hydraulic actuator 6, 25-27, and the operation amount (instruction information) of each control lever 141, 142 of the operation device. The target opening amount is, for example, the target amount of the meter-out opening among the meter-in opening and meter-out opening. This calculation uses, for example, a map that was stored in advance in the storage device 201. The target opening amount $Ad\_t$ of each directional control valve 36-46 from the calculation result is output to the directional control valve control command calculation section 220.

The directional control valve control command calculation section 220 calculates the directional control valve command corresponding to the target opening amount $Ad\_t$ of each directional control valve 36-46, which is the calculation result of the directional control valve target opening calculation section 219, and generates an electrical signal corresponding to the directional control valve command to output to each electromagnetic proportional reducing valve 113b, 113c for the directional control valve.

The CB cut valve target opening calculation section 221 calculates the target opening amount $Ac\_t$ of each CB cut valve 61-63 based on the operation amount (instruction information) of each control lever 141, 142 of the operation device. This calculation uses, for example, a map that was stored in advance in the storage device 201. The target opening amount $Ac\_t$ of each CB cut valve 61-63 from the calculation result is output to the CB cut valve control command calculation section 222.

The CB cut valve control command calculation section 222 calculates the CB cut valve command corresponding to the target opening amount $Ac\_t$ of each CB cut valve 61-63, which is the calculation result of the CB cut valve target opening calculation section 221, and generates an electrical signal corresponding to the CB cut valve command to output to each electromagnetic proportional reducing valve 113e for the CB cut valve.

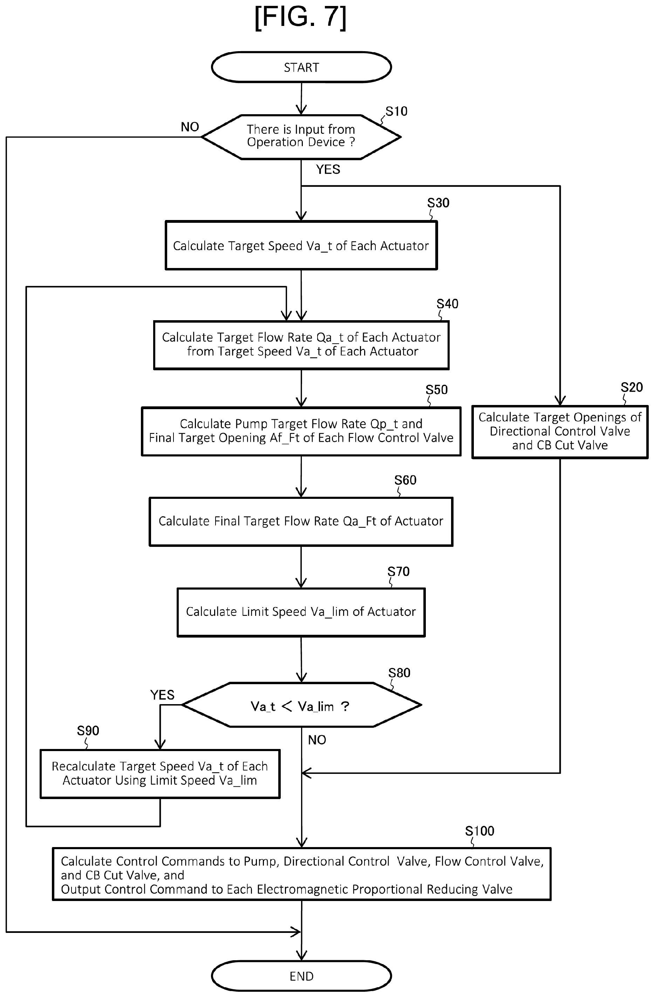

Next, the control procedure of the hydraulic system by the controller of the construction machine according to the first embodiment will be described with reference to FIG. 7. FIG. 7 is a flowchart showing an example of the control procedure by the controller of the construction machine according to the first embodiment shown in FIG. 4.

In FIG. 7, the controller 200 shown in FIG. 4 first determines the presence or absence of input operation signals from operation devices 141, 142 (Step S10). If it is determined in Step S10 that there is no input of operation signals (NO), the calculation processing related to the control of hydraulic pumps 31-33, directional control valves 36-46, flow control valves 51-59, and CB cut valves 61-63 is complete. On the other hand, if it is determined that there is an input of operation signals (YES), the process proceeds to Step S20 and Step S30.

In Step S20, the controller 200 calculates the target opening amount $Ad\_t$ (e.g., meter-out opening) of each directional control valve 36-46 based on the load pressure or thrust information of each hydraulic actuator 6, 25-27 obtained from the detected values of pressure sensors 124-127 and the operation amount (instruction information) of operation devices 141, 142. Furthermore, based on the operation amount (instruction information) of operation devices 141, 142, the target opening amount $Ac\_t$ of each CB cut valve 61-63 is calculated.

In parallel with Step S20, the controller 200 calculates the target speed $Va\_t$ of each hydraulic actuator 6, 25-27 so that the swing body 3 (machine body) and work implement 4 operate according to the operation of operation devices 141, 142 under predetermined conditions, based on the detection signals of posture detection devices 131-135, the target surface setting information of target surface setting device 151, and the operation signals (instruction information) of each control lever 141, 142 of the operation device (Step S30).

Next, the controller 200 calculates the target flow rate $Qa\_t$ of each hydraulic actuator 6, 25-27 from the target speed $Va\_t$ of each hydraulic actuator 6, 25-27, which is the calculation result of Step S30 (Step S40). Furthermore, from the target flow rate $Qa\_t$ of each hydraulic actuator 6, 25-27, which is the calculation result of Step S40, the pump target flow rate $Qp\_t$ of hydraulic pumps 31-33 is calculated. At the same time, based on the target flow rate $Qa\_t$ of each hydraulic actuator 6, 25-27, which is the calculation result of Step S40, the detected values of pressure sensors 121-127, and the limit opening area $Af\_lim$ of the setting value, the final target opening $Af\_Ft$ of each flow control valve 51-59 is calculated (Step S50).

Then, the controller 200 calculates the final target flow rate $Qa\_Ft$ of each hydraulic actuator 6, 25-27 based on the final target opening $Af\_Ft$ of each flow control valve 51-59, which is the calculation result of Step S50, and the detected values of pressure sensors 121-127 (Step S60). Furthermore, the speed of each hydraulic actuator 6, 25-27 corresponding to the final target flow rate $Qa\_Ft$ of each hydraulic actuator 6, 25-27, which is the calculation result of Step S60, is calculated as the limit speed $Va\_lim$ (Step S70).

Subsequently, the controller 200 determines whether the target speed $Va\_t$ of each hydraulic actuator 6, 25-27, which is the calculation result of Step S30, is smaller than the limit speed $Va\_lim$ of each hydraulic actuator 6, 25-27, which is the calculation result of Step S70 (Va_t<Va_lim ?) (Step S80). If it is determined as YES in Step S80, the process proceeds to Step S90, and Steps S40-S80 are repeated again. On the other hand, if it is determined as NO, the process proceeds to Step S100, and the series of processes is complete.

In Step S80, if it is determined that the target speed Va_t is smaller than the limit speed Va_li (YES), the calculation result of Step S30 is discarded, and the target speed Va_t of each hydraulic actuator 6, 25-27 is recalculated using the limit speed Va_lim of each hydraulic actuator 6, 25-27, which is the calculation result of Step S70 (Step S90). The recalculation of the target speed Va_t of each hydraulic actuator 6, 25-27 is based on the limit speed Va_lim of the hydraulic actuator corresponding to the flow control valve for which the limit opening area Af_lim is selected as the final target opening Af_Ft, and the target speed Va_t of the remaining hydraulic actuators necessary to execute the area limit control is recalculated.

In Step S90, since the target speed Va_t of each hydraulic actuator 6, 25-27 is recalculated using the limit speed Va_lim of each hydraulic actuator 6, 25-27, the processes of Steps S40-S80 are redone using the recalculated target speed Va_t of each hydraulic actuator 6, 25-27. As a result, the pump target flow rate Qp_t of hydraulic pumps 31-33, considering the limit speed Va_lim of hydraulic actuators 6, 25-27, and the final target opening Af_Ft of each flow control valve 51-59 are recalculated (Step S50).

On the other hand, in Step S80, if it is determined that the target speed Va_t is equal to or greater than the limit speed Va_lim (NO), the pump flow rate command is calculated from the pump target flow rate Qp_t, which is the calculation result or recalculation result of Step S50, and the command signal is output to the electromagnetic proportional reducing valve 113a for the pump. At the same time, the flow control valve command is calculated from the final target opening Af_Ft of each flow control valve 51-59, which is the calculation result or recalculation result of Step S50, and the command signal is output to the electromagnetic proportional reducing valve 113d for the flow control valve (Step S100). Additionally, the directional control valve command is calculated from the target opening Ad_t of each directional control valve 36-46, which is the calculation result of Step S20, and the command signal is output to the electromagnetic proportional reducing valves 113b, 113c for the directional control valve. At the same time, the CB cut valve command is calculated from the target opening Ac_t of each CB cut valve 61-63, and the command signal is output to the electromagnetic proportional reducing valve 113e for the CB cut valve (Step S100).

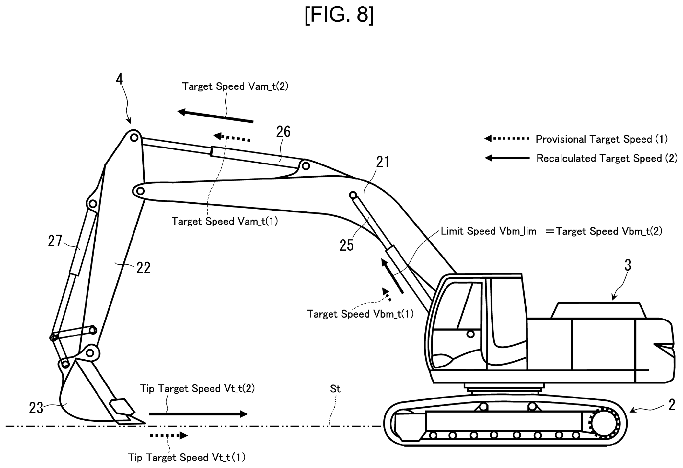

Next, the operation and effects of the construction machine according to the first embodiment will be described with reference to FIGS. 2 to 4 and FIGS. 6 to 8. FIG. 8 is an explanatory diagram showing the operation and effects of the construction machine according to the first embodiment.

Here, for simplicity of explanation, the operation when performing area limit control to move the tip of bucket 23 by the combined operation of boom 21 and arm 22 shown in FIG. 8 will be described as an example. In FIG. 8, the tip of bucket 23 is moved in the direction of drawing it toward the machine body 2, 3 with respect to the target surface St indicated by the two-dot chain line. The controller 200 shown in FIG. 4 executes area limit control to control the operation of boom 21 and arm 22 so that the tip of bucket 23 does not deviate from the target surface St. In this case, as arm 22 approaches a vertical posture, the raising amount of boom 21 gradually decreases.

Specifically, the controller 200 (211) calculates the target speed Vt_t(1) of the tip of bucket 23 so that it does not deviate from the target surface St, based on the operation signals of operation devices 141, 142, the detected values of posture detection devices 131-135, and the target surface setting information from target surface setting device 151. Furthermore, the target speed Vbm_t(1) of boom cylinder 25 and the target speed Vam_t(1) of arm cylinder 26 necessary to achieve the calculated tip target speed Vt_t(1) are calculated (Step S30 shown in FIG. 7). These calculated target speeds (thick dashed arrows in FIG. 8) are provisional settings.

When arm 22 approaches a vertical posture and the raising amount of boom 21 is small, in the calculation of controller 200 (215) shown in FIG. 6, the target opening area Af_t of flow control valves 53, 54, 58 for boom cylinder 25, calculated based on the target flow rate obtained from the target speed Vbm_t of boom cylinder 25, may become smaller than the limit opening area Af_lim that can ensure flow control accuracy. In this case, controller 200 (215) selects the limit opening area Af_lim as the final target opening area Af_Ft of flow control valves 53, 54, 58. As a result, the accuracy of flow control for boom cylinder 25 by flow control valves 53, 54, 58 can be ensured.

The controller 200 (217, 218) shown in FIG. 4 calculates the limit speed Vbm_lim of the boom cylinder 25 using the limit opening area Af_lim, which is the final target opening area Af_Ft of the flow control valves 53, 54, 58 for the boom cylinder 25, and the detected values of pressure sensors 121-124 (the differential pressure before and after the flow control valves 53, 54, 58).

The controller 200 (211) recalculates the target speed Vt_t(2) of the bucket 23's tip based on the limit speed Vbm_lim of the boom cylinder 25, maintaining the direction of the previous calculation result's target speed Vt_t(1) of the bucket 23's tip. Furthermore, it recalculates the target speed Vbm_t(2) of the boom cylinder 25 and the target speed Vam_t(2) of the arm cylinder 26 necessary to execute the recalculated target speed Vt_t(2) of the tip. In this case, the target speed Vbm_t(2) of the boom cylinder 25 is the limit speed Vbm_lim of the boom cylinder 25. In FIG. 8, the recalculated target speed is indicated by a thick solid arrow. Additionally, the controller 200 (215) recalculates the target opening area Af_t of the flow control valves 52, 55 for the arm cylinder 26 corresponding to the recalculated target speed Vam_t(2) of the arm cylinder 26.

Thus, in this embodiment, during the area limit control of the work implement 4, if the target speed of any of a plurality of hydraulic actuators falls below the limit speed, the target speed of each hydraulic actuator is recalculated to ensure the accuracy of flow control by each flow control valve 51-59 while maintaining the movement direction of the bucket 23 according to the operation of the operation devices 141, 142. As a result, the accuracy of flow control by each flow control valve 51-59 for the hydraulic actuators is ensured, allowing precise control of the bucket 23's movement.

As described above, the hydraulic excavator 1 (construction machine) according to the first embodiment includes a work implement 4 comprising a bucket 23 as a work tool, a boom cylinder 25, an arm cylinder 26, and a bucket cylinder 27 (at least one hydraulic actuator) for driving the work implement 4, flow control valves 51-59 as hydraulic equipment capable of adjusting the flow rate of pressure oil supplied to the hydraulic actuators 25-27, a controller 200 that controls the hydraulic actuators 25-27 via the flow control valves 51-59 (hydraulic equipment) to meet the condition that the bucket 23 (work tool) does not move beyond the target surface set as the work target, and IMUs 131-135 as posture detection devices for detecting the posture of the work implement 4. The controller 200 calculates the speed of the hydraulic actuators 25-27 as the target speed Va_t based on the detection information from the IMUs 131-135 (posture detection devices) and the target surface setting information, ensuring that the bucket 23 (work tool) meets the above condition, and calculates the target values of the flow control valves 51-59 (hydraulic equipment) corresponding to the calculated target speed Va_t of the hydraulic actuators 25-27. If the calculated target values of the flow control valves 51-59 (hydraulic equipment) are smaller than the lower limit value that can ensure the allowable accuracy of flow control by the flow control valves 51-59 (hydraulic equipment), the speed of the hydraulic actuators 25-27 obtained from this lower limit value is calculated as the limit speed Va_lim of the hydraulic actuators 25-27. Then, based on the calculated limit speed Va_lim of the hydraulic actuators, the target speed Va_t of the hydraulic actuators 25-27 is recalculated to ensure that the bucket 23 (work tool) meets the condition, and the flow control valves 51-59 (hydraulic equipment) are controlled using the recalculated target values of the flow control valves 51-59 (hydraulic equipment) as control targets.

According to this configuration, if the target values for controlling the flow control valves 51-59 (hydraulic equipment) that adjust the supply flow rate to the hydraulic actuators 25-27 fall below the lower limit value that can ensure the accuracy of flow control, the target values of the flow control valves 51-59 (hydraulic equipment) corresponding to the recalculated target speed Va_t of the hydraulic actuators 25-27, based on the limit speed Va_lim of the hydraulic actuators 25-27 calculated using this lower limit value, are used as control targets. Therefore, even when operating the work implement 4 with low-speed driving of the hydraulic actuators 25-27 during the area limit control of the work implement 4, it is possible to prevent a decrease in the accuracy of flow control for the hydraulic actuators 25-27, allowing precise control of the work implement's operation.

In this embodiment, at least one hydraulic actuator driving the work implement 4 is composed of a plurality of hydraulic actuators, including the boom cylinder 25, arm cylinder 26, and bucket cylinder 27. The calculation of the target speeds for a plurality of hydraulic actuators 25 to 27 in the controller 200 is based on the detection information from the IMUs 131 to 135 (posture detection devices) and the setting information of the target surface, in addition to the movement direction of the bucket 23 (work tool) obtained from the instruction information that indicates the operation of the work implement 4. Furthermore, the recalculation of the target speed of the hydraulic actuators 25-27 in the controller 200 is based on the limit speed calculated from the speeds of a plurality of hydraulic actuators 25-27 that meet the condition while maintaining the movement direction of the bucket 23 (work tool).

According to this configuration, the target speed of a plurality of hydraulic actuators 25-27 is recalculated so that the bucket 23 (work tool) moves in the direction corresponding to the instruction information based on the operation of the operation devices 141, 142 or the automatic control of the controller 200, allowing the work implement 4 to be operated in accordance with the instructions of the operation devices 141, 142 or the automatic control of the controller 200.

In this embodiment, the hydraulic equipment includes flow control valves 51-59 capable of controlling the flow rate of pressure oil supplied to the hydraulic actuators 25-27, and further includes pressure sensors 121-126 as pressure detection devices for detecting the differential pressure before and after the flow control valves 51-59. The target values of the hydraulic equipment are the target opening area Af_t of the flow control valves 51-59, calculated based on the target flow rate Qa_t of the hydraulic actuators 25-27 obtained from the calculated target speed Va_t of the hydraulic actuators 25-27, and the detected values of the pressure sensors 121-126 (pressure detection devices). The above lower limit value is the limit opening area Af_lim, preset according to the accuracy of flow control by the flow control valves 51-59. The calculation of the limit speed Va_lim of the hydraulic actuators 25-27 in the controller 200 is based on the flow rate calculated using the limit opening area Af_lim of the flow control valves 51-59 and the detected values of the pressure sensors 121-126 (pressure detection devices).

According to this configuration, in the operation limit control of the work implement 4, the operation of the work implement 4 can be accurately controlled by the flow control of the flow control valves 51-59 for the hydraulic actuators 25-27.

Furthermore, the hydraulic excavator 1 (construction machine) according to this embodiment includes directional control valves 37-42, 45, 46 capable of controlling the flow direction of pressure oil supplied to the hydraulic actuators 25-27 and the flow of pressure oil discharged from the hydraulic actuators 25-27. The flow control valves 51-59 are placed upstream of the directional control valves 37-42, 45, 46. The pressure detection device includes pressure sensors 124-126 for detecting the meter-in pressure and meter-out pressure of the hydraulic actuators 25-27. The controller 200 controls the meter-out opening of the directional control valves 37-42, 45, 46 based on the thrust information or pressure information of the hydraulic actuators 25-27 obtained from the detected values of the pressure sensors 124-126.

According to this configuration, in the operation limit control of the work implement 4, by controlling the meter-out openings of the directional control valves 37-42, 45, and 46, it is possible to prevent the runaway of the hydraulic actuators 25-27 due to the self-weight of the work implement 4.

[Second Embodiment]

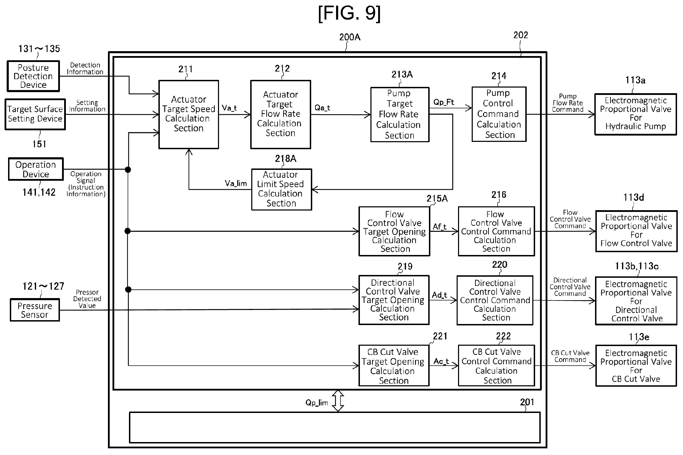

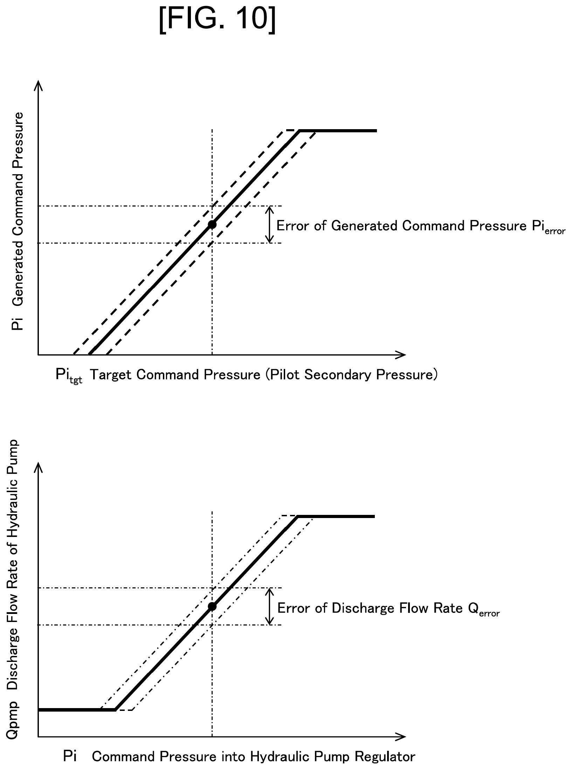

Next, the construction machine according to the second embodiment of the present invention will be described with reference to FIGS. 9 to 12. In FIGS. 9 to 12, parts with the same reference symbols as those shown in FIGS. 1 to 8 are similar parts, and detailed descriptions thereof will be omitted. FIG. 9 is a block diagram showing the hardware and functional configuration of the controller in the construction machine according to the second embodiment. FIG. 10 is a diagram showing the factors of the decrease in flow control accuracy (error factors) in the hydraulic pump, which is a component of the hydraulic system of the construction machine according to the second embodiment.

The difference between the construction machine according to the second embodiment and the first embodiment is that in the area limit control by the controller, the accuracy of flow control for each hydraulic actuator is ensured not by the lower limit of the flow control valve opening, but by the lower limit of the pump flow rate. That is, in the controller 200A of the construction machine according to the second embodiment shown in FIG. 9, the processing contents of the pump target flow rate calculation section 213A, the flow control valve target opening calculation section 215A, and the actuator limit speed calculation section 218A differ from the functional sections 213, 215, 218 of the controller 200 of the first embodiment. And, the actuator final target flow rate calculation section 217 of the controller 200 of the first embodiment becomes unnecessary. The other configurations of the second embodiment are the same as those of the first embodiment, and their descriptions are omitted.

In the area limit control of the controller 200A, for example, when it is necessary to drive any of the hydraulic actuators 6, 25-27 at low speed alone, the discharge flow rate of the hydraulic pumps 31-33 may become small. In this case, it is necessary to control the discharge flow rate of the hydraulic pumps 31-33 in small amounts. However, the control of the discharge flow rate of the hydraulic pumps 31-33 has error factors as shown in FIG. 10, and these error factors may decrease the accuracy of flow control for the hydraulic actuators 6, 25-27. When the accuracy of flow control decreases, it becomes difficult to maintain the accurate operation of the work implement 4, and there is a concern that the work implement 4 may move outside the limit area.

The control of the discharge flow rate of the hydraulic pump 32 (see FIG. 2) is performed as follows. First, the electromagnetic proportional reducing valve 113a (see FIG. 3) generates a command pressure based on the control command from the controller 200A. Second, when the command pressure generated by the electromagnetic proportional reducing valve 113a is input to the command pressure port 32a (see FIG. 2) of the regulator of the hydraulic pump 32 and the tilt of the swash plate or bent axis of the hydraulic pump 32 changes, the discharge flow rate is controlled according to the tilt of the hydraulic pump 32. The upper diagram of FIG. 10 shows the error range of the generated command pressure with respect to the target command pressure (control command from the controller) of the electromagnetic proportional reducing valve. The lower diagram of FIG. 10 shows the error range (due to manufacturing errors, etc.) of the discharge flow rate of the hydraulic pump with respect to the generated command pressure of the electromagnetic proportional reducing valve. Due to such error factors, when controlling the discharge flow rate of the hydraulic pump in small amounts, the accuracy of flow control may decrease.

Therefore, the pump target flow rate calculation section 213A of the controller 200A according to the second embodiment calculates the flow rate to be discharged by the hydraulic pumps 31-33 as the pump final target flow rate Qp_Ft based on the limit flow rate Qp_lim, which is a setting value, and the target flow rate Qa_t of each hydraulic actuator 6, 25-27, which is the calculation result of the actuator target flow rate calculation section 212. The calculated pump final target flow rate Qp_Ft is output to the pump control command calculation section 214 and the actuator limit speed calculation section 218A.

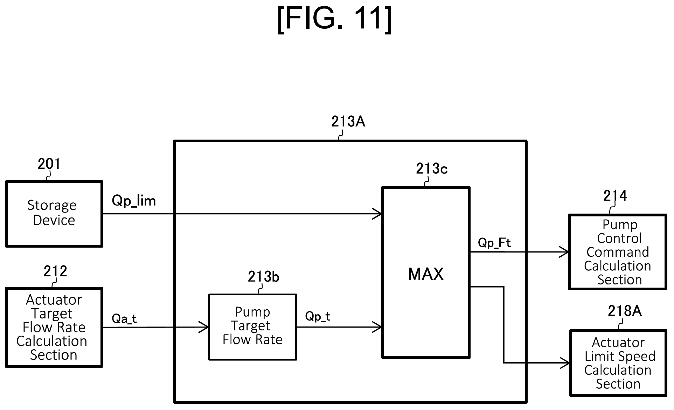

The calculation of the pump target flow rate calculation section 213A is specifically performed by the process shown in FIG. 11. FIG. 11 is a block diagram showing the subdivided processing functions of the pump target flow rate calculation section in the controller of the construction machine according to the second embodiment shown in FIG. 9.

The pump target flow rate calculation section 213A includes a pump target flow rate calculation processing section 213b and a maximum value selection processing section 213c. The pump target flow rate calculation processing section 213b calculates the target flow rate Qp_t of the hydraulic pumps 31-33 by summing the target flow rates Qa_t of each hydraulic actuator 6, 25-27, which are the calculation results of the actuator target flow rate calculation section 212. The maximum value selection processing section 213c selects the maximum value between the target flow rate Qp_t of the hydraulic pumps 31-33, which is the processing result of the pump target flow rate calculation processing section 213b, and the limit flow rate Qp_lim, which is pre-stored in the storage device 201. The maximum value selection processing section 213c outputs the maximum value between the calculated target flow rate Qp_t of the hydraulic pumps 31-33 and the limit flow rate Qp_lim of the setting value as the final target flow rate Qp_Ft of the hydraulic pumps 31-33 to the pump control command calculation section 214 and the actuator limit speed calculation section 218A.

The limit flow rate Qp_t corresponds to the minimum discharge flow rate at which the accuracy of flow control for each hydraulic actuator 6, 25-27 can maintain the allowable accuracy. The limit flow rate Qp_t is determined, for example, as follows. In the area limit control of the work implement 4, an allowable error is preset for the control of the tip position of the bucket 23. Corresponding to the allowable error of the position of the bucket 23, the allowable error of the driving speed of each hydraulic actuator 6, 25-27 can be defined. Corresponding to the allowable error of the driving speed of each hydraulic actuator 6, 25-27, the allowable error of the meter-in flow rate of each hydraulic actuator 6, 25-27 can be defined. The minimum value of the discharge flow rate of the hydraulic pumps 31-33, which can achieve the allowable error of the meter-in flow rate of each hydraulic actuator 6, 25-27, is set as the limit flow rate.

The actuator limit speed calculation section 218A calculates the speed of the hydraulic actuators 6, 25-27 corresponding to the final target flow rate Qp_Ft of the hydraulic pumps 31-33, which is the calculation result of the pump target flow rate calculation section 213A, as the limit speed Va_lim of the hydraulic actuators 6, 25-27. The calculated limit speed Va_lim of the hydraulic actuators 6, 25-27 is output to the actuator target speed calculation section 211.

The flow control valve target opening calculation section 215A calculates the target opening amount Af_t of each flow control valve 51-59 based on the operation amount (instruction information) of each control lever 141, 142 of the operation device. This calculation uses, for example, a map that has been pre-stored in the storage device 201. The calculated target opening amount Af_t of each flow control valve 51-59 is output to the flow control valve control command calculation section 216.

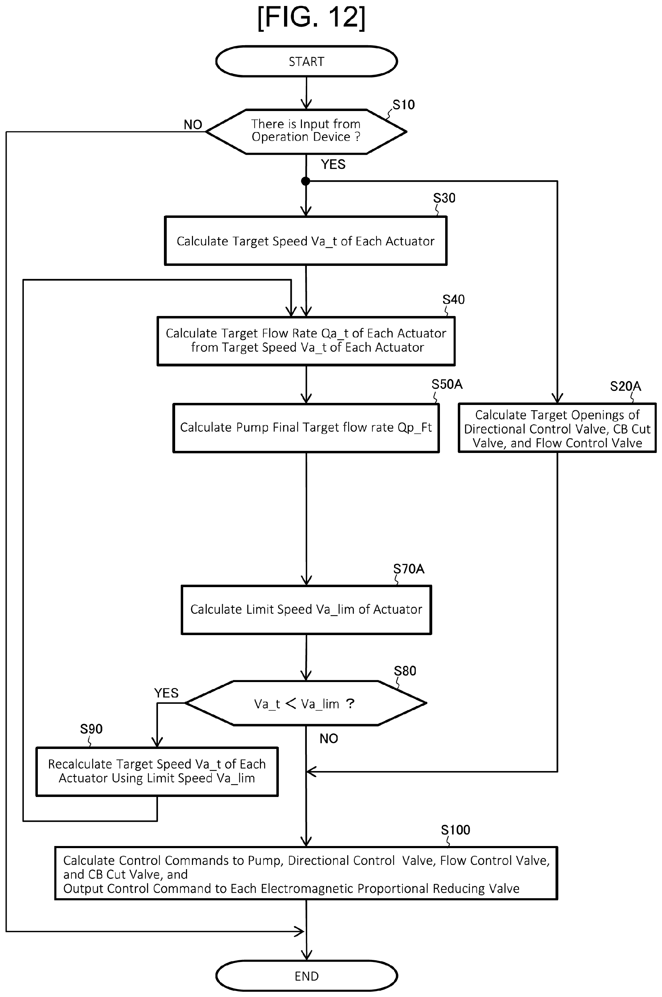

Next, the control procedure of the hydraulic system by the controller of the construction machine according to the second embodiment will be described with reference to FIG. 12. FIG. 12 is a flowchart showing an example of the control procedure by the controller of the construction machine according to the second embodiment shown in FIG. 9.

The difference in the control procedure of the controller according to the second embodiment shown in FIG. 12 from the control procedure of the controller according to the first embodiment (see FIG. 7) is that the processing contents of steps S20A, S50A, which execute the calculation of the pump final target flow rate Qp_Ft and the target opening Af_t of each flow control valve 51-59, are different, and the processing content of step S70A, which executes the calculation of the limit speed Va_lim of the hydraulic actuators 6, 25-27, is different. Furthermore, the processing of step S60 in the first embodiment is unnecessary. The processing of the other steps in the second embodiment is the same as the steps in the first embodiment, and their descriptions are omitted.

In FIG. 12, if the controller 200A shown in FIG. 9 determines that there is an input of an operation signal in step S10 (YES), it proceeds to step S20A and step S30. In step S20A, the controller 200A calculates the target opening amount Ad_t of each directional control valve 36-46 and the target opening amount Ac_t of each CB cut valve 61-63, similar to the first embodiment. Furthermore, unlike the first embodiment, it calculates the target opening amount Af_t of each flow control valve 51-59 based on the operation amount (instruction information) of the operation devices 141, 142.

In step S50A, the controller 200A calculates the maximum value between the target flow rate Qa_t of each hydraulic actuator 6, 25-27, which is the calculation result of step S40, and the limit flow rate Qp_lim of the setting value as the pump final target flow rate Qp_Ft of the hydraulic pumps 31-33. Next, the speed of each hydraulic actuator 6, 25-27 corresponding to the pump final target flow rate Qp_Ft of the hydraulic pumps 31-33, which is the calculation result of step S50A, is calculated as the limit speed Va_lim (step S70A).

Subsequently, the controller 200A determines whether the target speed Va_t of each hydraulic actuator 6, 25-27, which is the calculation result of step S30, is smaller than the limit speed Va_lim of each hydraulic actuator 6, 25-27, which is the calculation result of step S70A (Va_t<Va_lim ?) (step S80).

In step S80, if it is determined that the target speed Va_t is smaller than the limit speed Va_li (YES), the calculation result of step S30 is discarded, and the target speed Va_t of each hydraulic actuator 6, 25-27 is recalculated using the limit speed Va_lim of the hydraulic actuators 6, 25-27, which is the calculation result of step S70A (step S90). The recalculation of the target speed Va_t of each hydraulic actuator 6, 25-27 is based on the limit speed Va_lim of the hydraulic actuator when the limit flow rate Qp_lim is selected as the pump final target flow rate Qp_Ft, and the target speed Va_lim of each hydraulic actuator necessary to execute area limit control is recalculated.

In step S90, since the target speed Va_t of each hydraulic actuator 6, 25-27 was recalculated using the limit speed Va_lim of the hydraulic actuators 6, 25-27, the processes of steps S40, S50A, S70A, S80 are redone using the recalculated target speed Va_t of each hydraulic actuator 6, 25-27. As a result, the pump final target flow rate Qp_Ft of the hydraulic pumps 31-33, considering the limit speed Va_lim of the hydraulic actuators 6, 25-27, is recalculated.

Thus, in this embodiment, during the area limit control of the work implement 4, the final target flow rate Qp_Ft of the hydraulic pumps 31-33 is set to be equal to or greater than the limit flow rate Qp_lim that can ensure control accuracy. Therefore, the flow rate control of the hydraulic actuators 25-27 by the hydraulic pumps 31-33 can ensure the accuracy of the flow rate control for the hydraulic actuators 25-27.

If the target speed Va_t of the hydraulic actuators 25-27 is below the limit speed Va_lim, the target speed Va_t of the hydraulic actuators 25-27 is recalculated to ensure the accuracy of the flow rate control of the hydraulic pumps 31-33 while maintaining the movement direction of the bucket 23 according to the operation of the operation devices 141, 142. As a result, the accuracy of the flow rate control for the hydraulic actuators 25-27 by the hydraulic pumps 31-33 is ensured, allowing for precise control of the movement of the bucket 23.

In the second embodiment described above, if the target value for controlling the hydraulic pumps 31-33, which are hydraulic devices that adjust the supply flow rate to the hydraulic actuators 25-27, falls below the lower limit value that can ensure the accuracy of flow rate control, the target value of the hydraulic pumps 31-33 (hydraulic devices) corresponding to the recalculated target speed Va_t of the hydraulic actuators 25-27, based on the limit speed Va_lim of the hydraulic actuators 25-27 calculated using this lower limit value, is used as the control target. Therefore, in the area limit control of the work implement 4, even when operating the work implement 4 with low-speed driving of the hydraulic actuators 25-27, it is possible to prevent a decrease in the accuracy of flow rate control for the hydraulic actuators 25-27, allowing for precise control of the operation of the work implement 4.

Also, in this embodiment, the hydraulic devices are the hydraulic pumps 31-33 that supply pressure oil to the hydraulic actuators 25-27. Furthermore, the target flow rate of the hydraulic pumps 31-33 is calculated based on the target flow rate of the hydraulic actuators obtained from the target speed of the hydraulic actuators 25-27, for which the target value of the hydraulic devices has been calculated. The above-mentioned lower limit value is a limit flow rate preset according to the accuracy of the flow rate control of the hydraulic pumps 31-33. The calculation of the limit speed of the hydraulic actuators 25-27 in the controller 200A is based on the limit flow rate of the hydraulic pumps 31-33.

According to this configuration, in the operation limit control of the work implement 4, the flow rate control of the hydraulic pumps 31-33 for the hydraulic actuators 25-27 allows for precise control of the operation of the work implement 4.

[Other Embodiments]

It should be noted that the present invention is not limited to the first embodiment described above, and various modifications are included. The embodiments described above have been explained in detail to clearly describe the present invention, and are not necessarily limited to including all the configurations described. It is also possible to add, delete, or replace some of the configurations of this embodiment with other configurations.

For example, in the first and second embodiments described above, an example is shown in which the controllers 200, 200A control the opening of the directional control valves 37-42, 44-46 and the flow control valves 51-59, as well as the flow rate of the hydraulic pumps 31-33, based on the instruction information as the operation of the control levers 141, 142 of the operation device that instructs the operation of the swing body 3 and the work implement 21, 22, 23. However, it is also possible for the controllers 200, 200A to control the opening of the directional control valves 37-42, 44-46 and the flow control valves 51-59, as well as the flow rate of the hydraulic pumps 31-33, based on the instruction information as the operation of a remote operating device that instructs the operation of the swing body 3 and the work implement 21, 22, 23 remotely. Furthermore, it is also possible for the controllers 200, 200A to control the opening of the directional control valves 37-42, 44-46 and the flow control valves 51-59, as well as the flow rate of the hydraulic pumps 31-33, based on the instruction information as the operation instructions for the swing body 3 and the work implement 21, 22, 23, which are generated by themselves to execute operations that meet predetermined conditions through automatic control.

Also, in the first and second embodiments described above, an example is shown in which the flow control valves 51-59 are used as control valves capable of controlling the flow rate of pressure oil supplied to the hydraulic actuators 25-27 that drive the work implement 4. However, it is also possible to use a configuration in which directional control valves that control the direction of supply and discharge of pressure oil to the hydraulic actuators are used as control valves capable of controlling the flow rate of pressure oil supplied to the hydraulic actuators 25-27. In this configuration, it is possible to control the flow rate of pressure oil supplied to the hydraulic actuators 25-27 by the meter-in opening area of the directional control valves.

Description of Reference Characters

1: Hydraulic excavator (construction machine),
4: Work implement,
23: Bucket (work tool),
25: Boom cylinder (hydraulic actuator),
26: Arm cylinder (hydraulic actuator),
27: Bucket cylinder (hydraulic actuator),
31: First hydraulic pump (hydraulic pump),

32: Second hydraulic pump (hydraulic pump),
33: Third hydraulic pump (hydraulic pump),
37,38,39,40,41,42,45,46: Directional control valve,
51,52,53,54,55,56,58,59: Flow control valve (control valve),
121,122,123: Pressure sensor (pressure detection device),
124,125,126: Pressure sensor (pressure detection device),
131,132,133,134,135: IMU (posture detection device),
200,200A: Controller

**Claims**

1. A construction machine comprising:

   a work implement including a work tool;
   at least one hydraulic actuator for driving the work implement;
   a hydraulic equipment capable of adjusting a flow rate of pressure oil supplied to the hydraulic actuator;
   a controller configured to control the hydraulic actuator via the hydraulic equipment such that a condition is satisfied that the work tool does not move beyond a target surface set as a work target of the work tool; and
   a posture detection device for detecting a posture of the work implement, wherein
   the controller is configured to:

   calculate a speed of the hydraulic actuator as a target speed based on detection information from the posture detection device and setting information of the target surface, such that the work tool meets the condition;
   calculate a target value of the hydraulic equipment corresponding to the calculated target speed of the hydraulic actuator;
   if the calculated target value of the hydraulic equipment is smaller than a lower limit value that can ensure an allowable accuracy of flow control by the hydraulic equipment,
   calculate a speed of the hydraulic actuator obtained from the lower limit value as a limit speed of the hydraulic actuator;
   recalculate, based on the calculated limit speed of the hydraulic actuator, a target speed of the hydraulic actuator such that the work tool meets the condition; and
   control the hydraulic equipment by a target value of the hydraulic equipment corresponding to the recalculated target speed of the hydraulic actuator as a control target.

2. The construction machine according to claim 1, wherein the at least one hydraulic actuator for driving the work implement is composed of a plurality of hydraulic actuators,

   the calculation of the target speed of the hydraulic actuator in the controller includes calculation of the target speed of each of the plurality of the hydraulic actuators performed based on the movement direction of the work tool obtained from instruction information that instructs an operation of the work implement, in addition to the detection information from the posture detection device and the setting information of the target surface, and
   the recalculation of the target speed of the hydraulic actuator in the controller includes calculation, performed based on the calculated limit speed, of speeds of the plurality of hydraulic actuators such that the work tool meets the condition while maintaining the movement direction.

3. The construction machine according to claim 1, wherein

   the hydraulic equipment is a flow control valve capable of controlling the flow rate of pressure oil supplied to the hydraulic actuator,
   the construction machine further comprises a pressure detection device for detecting a differential pressure before and after the flow control valve,
   the target value of the hydraulic equipment is a target opening area of the flow control valve calculated based on a target flow rate of the hydraulic actuator obtained from the calculated target speed of the hydraulic actuator and a detected value of the pressure detection device,
   the lower limit value is a limit opening area preset for the flow control valve according to an accuracy of flow control of the flow control valve, and
   the calculation of the limit speed of the hydraulic actuator in the controller is performed based on a flow rate calculated using the limit opening area of the flow control valve and the detected value of the pressure detection device.

4. The construction machine according to claim 3, further comprising a directional control valve configured to control a flow direction of pressure oil supplied to the hydraulic actuator and a flow of pressure oil discharged from the hydraulic actuator, wherein

the flow control valve is placed upstream of the directional control valve,
the pressure detection device includes pressure sensors for detecting a meter-in pressure and a meter-out pressure of the hydraulic actuator, and
the controller is configured to control a meter-out opening of the directional control valve based on thrust information or pressure information of the hydraulic actuator obtained from detected values of the pressure sensors.

5. The construction machine according to claim 1, wherein

the hydraulic equipment is a hydraulic pump that supplies pressure oil to the hydraulic actuator,
the target value of the hydraulic equipment is a target flow rate of the hydraulic pump calculated based on a target flow rate of the hydraulic actuator obtained from the calculated target speed of the hydraulic actuator,
the lower limit value is a limit flow rate preset for the hydraulic pump according to an accuracy of flow control of the hydraulic pump, and
the calculation of the limit speed of the hydraulic actuator in the controller is performed based on the limit flow rate of the hydraulic pump.

[FIG. 1]

[FIG. 2]

[FIG. 3]

EP 4 768 669 A1

## [FIG. 4]

# [FIG. 5]

Pi Generated Command Pressure

Error of Generated Command Pressure Pi_error

Pi_tgt Target Command Pressure (Pilot Secondary Pressure)

X Displacement of Flow Control Valve

Error of Displacement X_error

Pi Command Pressure onto Flow Control Valve

A Opening Area of Flow Control Valve

Error of Opening Area A_error

X Displacement of Flow Control Valve

[FIG. 6]

# [FIG. 7]

```
                    START
                      │
                      ▼
         NO ◄─── S10 There is Input from
                      Operation Device ?
                      │ YES
                      ▼
              S30 Calculate Target Speed Va_t of Each Actuator
                      │
                      ▼
              S40 Calculate Target Flow Rate Qa_t of Each Actuator
                      from Target Speed Va_t of Each Actuator
                      │
                      ▼
              S50 Calculate Pump Target Flow Rate Qp_t and
                  Final Target Opening Af_Ft of Each Flow Control Valve

              S20 Calculate Target Openings of
                  Directional Control Valve
                  and CB Cut Valve
                      │
                      ▼
              S60 Calculate Final Target Flow Rate Qa_Ft of Actuator
                      │
                      ▼
              S70 Calculate Limit Speed Va_lim of Actuator
                      │
                      ▼
         YES ◄─── S80 Va_t < Va_lim ?
                      │ NO
              S90 Recalculate Target Speed Va_t of Each
                  Actuator Using Limit Speed Va_lim
                      │
                      ▼
              S100 Calculate Control Commands to Pump, Directional Control Valve, Flow Control Valve,
                   and CB Cut Valve, and
                   Output Control Command to Each Electromagnetic Proportional Reducing Valve
                      │
                      ▼
                    END
```

[FIG. 8]

Target Speed Vam_t(2)

Provisional Target Speed (1)
Recalculated Target Speed (2)

Target Speed Vam_t(1)

Limit Speed Vbm_lim ＝Target Speed Vbm_t(2)

Target Speed Vbm_t(1)

Tip Target Speed Vt_t(2)

St

Tip Target Speed Vt_t(1)

[FIG. 9]

200A — 202

131～135
Posture Detection Device — Detection Information

Target Surface Setting Device — Setting Information
151

Operation Device — Operation Signal (Instruction Information)
141,142

121～127
Pressure Sensor — Pressor Detected Value

211
Actuator Target Speed Calculation Section — Va_t

212
Actuator Target Flow Rate Calculation Section — Qa_t

213A
Pump Target Flow Rate Calculation Section — Qp_Ft

214
Pump Control Command Calculation Section — Pump Flow Rate Command

113a
Electromagnetic Proportional Valve For Hydraulic Pump

218A
Actuator Limit Speed Calculation Section — Va_lim

215A
Flow Control Valve Target Opening Calculation Section — Af_t

216
Flow Control Valve Control Command Calculation Section — Flow Control Valve Command

113d
Electromagnetic Proportional Valve For Flow Control Valve

219
Directional Control Valve Target Opening Calculation Section — Ad_t

220
Directional Control Valve Control Command Calculation Section — Directional Control Valve Command

113b,113c
Electromagnetic Proportional Valve For Directional Control Valve

221
CB Cut Valve Target Opening Calculation Section — Ac_t

222
CB Cut Valve Control Command Calculation Section — CB Cut Valve Command

113e
Electromagnetic Proportional Valve For CB Cut Valve

Qp_lim

201

[FIG. 10]

[FIG. 11]

# [FIG. 12]

```
                    ┌──────────────┐
                    │    START     │
                    └──────┬───────┘
                           │
                           ▼                    S10
      NO    ┌─────────────────────────────┐
   ◄────────┤  There is Input from        │
            │  Operation Device ?         │
            └─────────────┬───────────────┘
                          │ YES
                          ●────────────────────────────┐
                          ▼                   S30       │
            ┌─────────────────────────────┐            │
            │ Calculate Target Speed Va_t  │           │
            │ of Each Actuator             │           │
            └─────────────┬───────────────┘            │
                          ▼                   S40       │
            ┌─────────────────────────────┐            │
            │ Calculate Target Flow Rate   │           │
            │ Qa_t of Each Actuator        │           │
            │ from Target Speed Va_t       │           │
            │ of Each Actuator             │           │
            └─────────────┬───────────────┘            │
                          ▼          S50A               ▼           S20A
            ┌──────────────────────────┐   ┌─────────────────────────┐
            │ Calculate Pump Final      │  │ Calculate Target Openings │
            │ Target flow rate Qp_Ft    │  │ of Directional Control    │
            └─────────────┬─────────────┘  │ Valve, CB Cut Valve, and  │
                          │                │ Flow Control Valve        │
                          ▼        S70A     └─────────────────────────┘
            ┌──────────────────────────┐
            │ Calculate Limit Speed     │
            │ Va_lim of Actuator        │
            └─────────────┬─────────────┘
                          ▼          S80
      YES   ┌──────────────────────────┐
   ◄────────┤      Va_t < Va_lim ?     │
            └─────────────┬────────────┘
                          │ NO
      S90                 │
   ┌──────────────────┐   │
   │ Recalculate       │  │
   │ Target Speed Va_t │  │
   │ of Each Actuator  │  │
   │ Using Limit Speed │  │
   │ Va_lim            │  │
   └─────────┬─────────┘  │
             │            ▼              S100
   ┌────────────────────────────────────────────┐
   │ Calculate Control Commands to Pump,         │
   │ Directional Control Valve, Flow Control      │
   │ Valve, and CB Cut Valve, and                │
   │ Output Control Command to Each              │
   │ Electromagnetic Proportional Reducing Valve │
   └──────────────────┬─────────────────────────┘
                      ▼
               ┌──────────────┐
               │     END      │
               └──────────────┘
```

## INTERNATIONAL SEARCH REPORT

| International application No. |
| --- |
| **PCT/JP2024/034798** |

| A. | CLASSIFICATION OF SUBJECT MATTER |
| --- | --- |

*E02F 9/20*(2006.01)i; *E02F 3/43*(2006.01)i; *F15B 11/02*(2006.01)i; *F15B 11/16*(2006.01)i; *F15B 11/042*(2006.01)i; *F15B 11/044*(2006.01)i

FI:  E02F9/20 Q; E02F3/43 C; F15B11/042; F15B11/16 Z; F15B11/044; F15B11/02 C

According to International Patent Classification (IPC) or to both national classification and IPC

| B. | FIELDS SEARCHED |
| --- | --- |

Minimum documentation searched (classification system followed by classification symbols)

E02F9/20; E02F3/43; F15B11/02; F15B11/16; F15B11/042; F15B11/044

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2014-98487 A (LINDE HYDRAULICS GMBH & CO., KG) 29 May 2014 (2014-05-29) | 1-5 |
| A | JP 2021-4540 A (HITACHI CONSTRUCTION MACHINERY CO., LTD.) 14 January 2021 (2021-01-14) | 1-5 |
| A | WO 2018/051511 A1 (HITACHI CONSTRUCTION MACHINERY CO., LTD.) 22 March 2018 (2018-03-22) | 1-5 |
| A | WO 2018/173361 A1 (HITACHI CONSTRUCTION MACHINERY CO., LTD.) 27 September 2018 (2018-09-27) | 1-5 |

☐ Further documents are listed in the continuation of Box C.     ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
| --- | --- |
| **22 November 2024** | **03 December 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/034798**

| Patent document cited in search report | | | Publication date (day/month/year) | Patent family member(s) | | | Publication date (day/month/year) |
|---|---|---|---|---|---|---|---|
| JP | 2014-98487 | A | 29 May 2014 | DE | 102012110978 | A1 | |
| | | | | KR | 10-2014-0063469 | A | |
| JP | 2021-4540 | A | 14 January 2021 | US | 2022/0186459 | A1 | |
| | | | | WO | 2020/262201 | A1 | |
| | | | | EP | 3992371 | A1 | |
| | | | | CN | 113423895 | A | |
| | | | | KR | 10-2021-0113325 | A | |
| WO | 2018/051511 | A1 | 22 March 2018 | US | 2019/0226181 | A1 | |
| | | | | EP | 3514288 | A1 | |
| | | | | CN | 108055855 | A | |
| | | | | KR | 10-2018-0044274 | A | |
| | | | | KR | 10-2019-0110641 | A | |
| WO | 2018/173361 | A1 | 27 September 2018 | US | 2020/0224383 | A1 | |
| | | | | EP | 3604684 | A1 | |
| | | | | KR | 10-2019-0034648 | A | |
| | | | | CN | 109689978 | A | |

Form PCT/ISA/210 (patent family annex) (July 2022)

**REFERENCES CITED IN THE DESCRIPTION**

**Patent documents cited in the description**

- WO 1995030059 A
- JP 2014098487 A